(19) **Europäisches Patentamt European Patent Office Office européen des brevets**

(11) **EP 2 171 504 B1**

(12) **FASCICULE DE BREVET EUROPEEN**

(45) Date de publication et mention de la délivrance du brevet:
**01.01.2020 Bulletin 2020/01**

(21) Numéro de dépôt: **08786224.9**

(22) Date de dépôt: **17.07.2008**

(51) Int Cl.:
**G02B 3/14** *(2006.01)*    **G02B 7/188** *(2006.01)*

(86) Numéro de dépôt international:
**PCT/EP2008/059392**

(87) Numéro de publication internationale:
**WO 2009/010562 (22.01.2009 Gazette 2009/04)**

(54) **DISPOSITIF OPTIQUE À MEMBRANE DÉFORMABLE PAR ACTIONNEMENT ÉLECTROSTATIQUE**

OPTISCHE VORRICHTUNG MIT DURCH ELEKTROSTATISCHE BETÄTIGUNG VERFORMBARER MEMBRAN

OPTICAL DEVICE WITH MEMBRANE THAT CAN BE DEFORMED BY ELECTROSTATIC ACTUATION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.07.2007  FR 0756619**

(43) Date de publication de la demande:
**07.04.2010  Bulletin 2010/14**

(73) Titulaire: **Webster Capital LLC**
**Wilmington, Delaware 19801 (US)**

(72) Inventeur: **BOLIS, Sébastien**
**F-38920 Crolles (FR)**

(74) Mandataire: **Lang, Johannes**
**Bardehle Pagenberg Partnerschaft mbB**
**Patentanwälte, Rechtsanwälte**
**Postfach 86 06 20**
**81633 München (DE)**

(56) Documents cités:
| | |
|---|---|
| WO-A-2004/059364 | CH-A- 159 709 |
| FR-A1- 2 889 633 | JP-A- 11 133 210 |
| JP-A- 60 220 301 | US-A1- 2005 030 438 |

**Description**

**DOMAINE TECHNIQUE**

La présente invention est relative à un dispositif optique à membrane déformable par actionnement électrostatique tel une lentille liquide à distance focale variable, une lentille liquide à correction d'aberrations optique en optique adaptative ou même un miroir à membrane déformable.

Parmi tous les types de lentilles liquides à distance focale variable, il en existe un formé d'un liquide optique travaillant à volume constant entre des parois parmi lesquelles au moins une peut être déplacée. Par liquide optique, on entend un liquide qui a des propriétés optiques appropriées à la réfraction de la lumière et qui possède un indice supérieur à 1, typiquement 1,4 ou 1,5. Par la suite on emploiera simplement le terme liquide. Toutefois les lentilles de ce type sont peu utilisées dans les appareils photos miniatures tels que ceux intégrés dans les téléphones-appareils photos car les structures mécaniques de variation de leur distance focale sont complexes, elles pénalisent l'encombrement, le coût et la fiabilité de ces lentilles.

Ces appareils photos miniatures, fonctionnant dans le visible, sont connus sous la dénomination anglo-saxonne CCM pour « compact camera module ». Ces derniers sont plutôt dotés de lentilles constituées d'un ou deux liquide sur lesquels est appliquée une tension afin de modifier leur mouillabilité.

Toutefois, de nombreux développements sont en cours dont notamment la fonction d'autofocus et la fonction zoom. On cherche lors de l'introduction de ces fonctions, à obtenir un temps de réponse le plus court possible. Plus globalement, on cherche à intégrer le plus possible les constituants des ces appareils photos miniatures pour réduire les coûts, l'encombrement et la consommation d'énergie.

Une autre application concerne les caméras fonctionnant dans l'infrarouge (IR). L'avancement en terme d'intégration est moindre, dans la plupart des cas, les optiques sont dissociées des caméras. Plusieurs développements sont en cours dont notamment l'intégration des optiques (création d'un module caméra), l'intégration de la fonction autofocus,... Pour l'instant, les solutions techniques associées ne sont pas connues et demandent à être définies.

Dans une application de miroir à membrane déformable, cette dernière est réfléchissante. On peut être amené à vouloir ajuster la distance focale du miroir et donc son rayon de courbure. Un tel miroir peut être utilisé en ophtalmologie ou en optique adaptative.

**ÉTAT DE LA TECHNIQUE ANTÉRIEURE**

Les dispositifs optiques à distance focale variable tels des lentilles liquides à distance focale variable constituées d'un liquide travaillant à volume constant entre deux parois dont au moins une est mobile ont fait l'objet de plusieurs brevets, par exemple : US-B-5 917 657, US-B-6 344 930, JP-A-10-144975, JP-A-08-114 703, US-A-5 138 494, WO 2003/102636, JP2002-243918, JP-A-60 220301, JP-A-11-133210, EP2 889 633 A1 et US2005/ 0030438 A1. Aucun de ces brevets ne mentionne une application pour un appareil photo de téléphone portable, mais plutôt pour des lunettes, des microscopes optiques et des appareils photos numériques par exemple. En fait les structures mécaniques associées aux membranes sont toutes très complexes et ont un coût beaucoup trop élevé pour ce genre d'application.

Les figures 16A, 16B montrent deux exemples de lentilles liquides à distance focale variable, décrits dans le brevet US-B-5 917 657. Ces lentilles sont choisies car elles illustrent les lentilles les moins complexes.

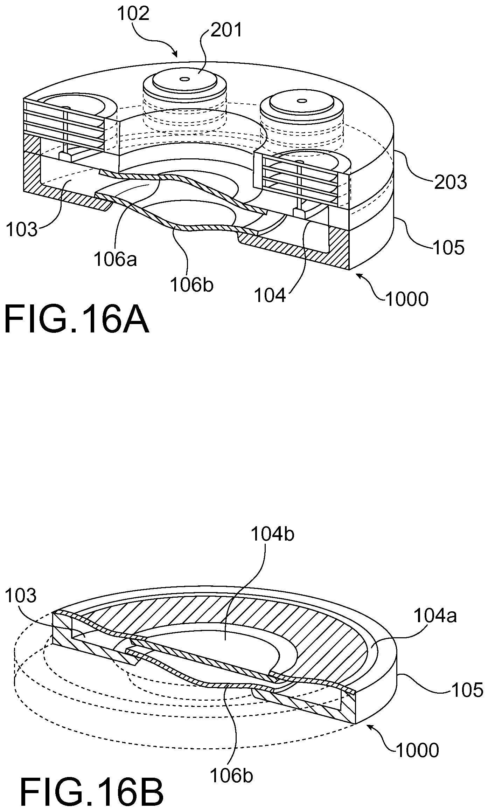

La lentille liquide 1000 de la figure 16A est constituée d'un premier film élastique transparent 106a central, d'un second film élastique transparent central 106b, d'un film élastique 104 périphérique et d'un conteneur périphérique 105. Les premier et second films élastiques transparents 106a, 106b sont placés en vis-à-vis. Le film élastique 104 périphérique est fixé autour du premier film élastique transparent 106a et l'ensemble forme une première membrane. La seconde paroi est constituée par le second film élastique. Tous ces éléments sont scellés hermétiquement les uns aux autres et contiennent un liquide 103. Les moyens de commande de la lentille 102, dont la fonction est d'exercer une pression sur le liquide 103, sont formés de plusieurs actionneurs 201 disposés dans un conteneur 203 en forme de couronne. Leur action a lieu sur le film élastique 104. Les deux conteneurs 105, 203 sont assemblés face à face.

Sur la variante de la figure 16B, le film élastique 106a est remplacé par une plaque transparente 104b. Les moyens de commande de la lentille 1000 sont maintenant formés par un élément piézoélectrique annulaire reporté sur le film élastique périphérique 104 afin de former une structure unimorphe.

Ces lentilles liquides 1000 présentent des inconvénients que l'on va lister. Plusieurs plaques et/ou films sont scellés hermétiquement ensemble et au conteneur pour encapsuler le liquide. Notamment l'une des parois de la lentille comporte soit une plaque solidaire d'un film, soit deux films solidaires entre eux. Plus le nombre d'éléments à sceller ensemble est grand plus le risque de fuite est important.

Dans la demande de brevet japonaise JP-A-60 220301, la membrane est continue du centre au bord mais le dispositif d'actionnement est magnétique et ce n'est pas satisfaisant tant au niveau de l'encombrement qu'au niveau de ses performances et de sa fabrication. En effet le dispositif d'actionnement comporte une bobine devant être alimentée par un courant électrique logée dans le support et des plaques en matériau magnétique, solidaires de la membrane et disposées en couronne entre son bord et la partie centrale. Cette configuration est pénalisante notamment en termes de fabrication puisque plusieurs matériaux de natures différentes, dont certains comme le matériau magnétique des plaques ne sont pas compatibles avec l'environnement microélectronique pour des raisons de contamination. Un traitement double face du dispositif est nécessaire pour pouvoir réaliser d'un côté la bobine et de l'autre les plaques. De plus, la bobine est volumineuse. En outre, un actionnement magnétique est pénalisant à la fois en terme de consommation électrique et en terme de dissipation thermique. Les inconvénients des actionneurs magnétiques sont exposés dans l'article intitulé « Electromagnetic actuations for MOEMS, examples, adavantages and drawbacks of MAGMAS » de Gilbert REYNE, JEMS'01 Joint European Magnetic Symposia N°1, Grenoble France 2002, vol 242-45(2), pages 1119-1125.

Les procédés de fabrication de ces lentilles sont unitaires et pluridisciplinaires. Ces procédés incluent des techniques issues de la plasturgie pour élaborer et mettre en forme les films, des techniques d'injection et d'usinage pour réaliser les conteneurs. Les procédés d'assemblage hermétique des films ou plaque au conteneur sont différents selon la nature du scellement (plastique-plastique, plastique-verre, plastique-métal). De plus les scellements à réaliser ne sont pas tous situés dans un même plan, ce qui entraîne des manipulations délicates de films ou de plaque, ce qui complique considérablement le procédé employé et l'outillage nécessaire. Ces techniques ne sont pas compatibles avec les procédés classiques de fabrication par lots employés pour la réalisation de systèmes micro électromécaniques MEMS ou de systèmes micro optoélectromécaniques MOEMS. Leur coût reste en conséquence élevé et leur encombrement également.

Les lentilles liquides requièrent un parallélisme aussi bon que possible entre la périphérie de la paroi déformable et le bord du conteneur. En cas de défaut, il apparaît des aberrations optiques qui dégradent la qualité des images obtenues à l'aide de ces lentilles. Le procédé de fabrication des lentilles liquides actuelles ne permet pas de garantir ce parallélisme.

## EXPOSÉ DE L'INVENTION

La présente invention a justement pour but de fournir un dispositif optique à membrane déformable tel une lentille liquide ou un miroir qui ne possède pas les inconvénients mentionnés ci-dessus à savoir la complexité et le volume de l'actionnement, l'incompatibilité avec l'environnement microélectronique, l'impossibilité d'être fabriqué par lots, le risque de fuite important et les aberrations optiques. L'objectif précité est atteint par l'invention définie dans les revendications indépendantes; des modifications de l'invention sont définies dans les revendications dépendantes.

Plus précisément, la présente invention concerne un dispositif optique à membrane déformable comportant une zone d'ancrage sur un support, contribuant à emprisonner un volume constant de liquide en contact avec l'une de ses faces, dite face arrière, une zone sensiblement centrale apte à se déformer de manière réversible depuis une position de repos, des moyens d'actionnement pour déplacer le liquide au niveau de la zone centrale sollicitant la membrane dans au moins une zone située strictement entre la zone centrale et la zone d'ancrage. Les moyens d'actionnement sont électrostatiques et comportent au moins une paire d'électrodes en vis à vis, l'une des électrodes de la paire étant au niveau de la face arrière de la membrane en étant au contact avec le liquide, l'autre étant au niveau du support, ces électrodes étant séparées par du diélectrique, le diélectrique étant formé du liquide.

Il est possible de prévoir, pour éviter des risques de court-circuit, en plus du liquide un diélectrique supplémentaire baigné par le liquide.

Le diélectrique supplémentaire peut être la membrane.

En variante, le diélectrique supplémentaire peut être une couche diélectrique qui revêt l'électrode de la paire située au niveau du support.

Les moyens d'actionnement ont une position de repos dans laquelle la membrane peut être concave, convexe ou sensiblement plane.

La membrane peut être homogène entre le champ optique et la zone sollicitée.

La zone sollicitée peut s'étendre jusqu'à la zone centrale sans empiéter sur elle ou s'arrêter avant la zone centrale.

La zone sollicitée peut s'étendre jusqu'à la zone d'ancrage sans empiéter sur elle ou s'arrêter avant la zone d'ancrage.

L'électrode se trouvant au niveau de la membrane est en contact avec une face arrière de la membrane en contact avec le liquide.

On peut prévoir qu'une paire d'électrodes coopère avec une butée mécanique visant à éviter que les deux électrodes de la paire viennent en contact lors de l'actionnement.

La membrane peut être monocouche ou multicouche.

La membrane peut comporter au moins une couche continue qui s'étend sur toute la surface de la membrane pour éviter le risque de fuite.

Dans un mode de réalisation, la membrane peut être réalisée en matériau électriquement conducteur et servir d'électrode.

La zone sollicitée lorsqu'elle est unique entoure la zone centrale, lorsqu'il y a plusieurs zones sollicitées, elles peuvent chacune entourer la zone centrale ou l'ensemble des zones sollicitées peut entourer la zone centrale.

La zone sollicitée peut être une couronne ou une portion de couronne éventuellement munie de doigts radiaux se projetant vers la zone d'ancrage ou vers la zone centrale.

Les zones sollicitées sont sensiblement circulaires, polygonales, des portions de croissant, des portions de secteur angulaire, des bandes radiales.

Lorsque zones sollicitées forment une couronne discontinue autour de la zone centrale, la membrane peut comporter en outre une zone de renfort continue entourant la zone centrale, plus rigide que les zones sollicitées, située entre la zone centrale et les zones sollicitées.

Le support peut être sensiblement plan ou posséder une cuvette pour accueillir le liquide.

Il est possible que le liquide déborde de la cuvette.

Le support peut comporter une cuvette avec un fond et un flanc incliné, l'électrode au niveau du support s'étendant sur le fond et le flanc.

Le support peut comporter une cuvette ayant un fond pourvu d'au moins une marche, l'électrode au niveau du support s'étendant sur la marche.

Le support peut comporter un cadre et une seconde membrane ancrée sur le cadre, l'électrode située au niveau du support étant en contact avec la seconde membrane.

Le support peut comporter un cadre et une plaque transparente fixée au cadre contribuant à former une cuvette pour le liquide, la plaque transparente ayant des faces sensiblement planes et parallèles ou une face externe à la cuvette sensiblement concave ou une face externe à la cuvette sensiblement convexe.

Le support peut comporter deux substrats assemblés l'un à l'autre, la membrane étant solidaire de l'un des substrats, l'électrode située au niveau du support étant solidaire de l'autre substrat.

Il est possible de prévoir des moyens capacitifs de mesure de l'épaisseur de liquide au niveau de la zone sollicitée.

Les moyens capacitifs de mesure peuvent être confondus ou partiellement confondus avec les électrodes des moyens d'actionnement.

Le dispositif optique peut comporter des moyens d'asservissement des moyens d'actionnement en fonction de l'épaisseur de liquide mesurée.

Le dispositif peut être réalisé par des techniques de la microélectronique ou des micro systèmes.

La membrane peut être réalisée à base de matériaux organiques tels que le polydiméthylsiloxane, le polyméthacrylate de méthyle, le polyéthylène téréphtalate, le polycarbonate, le parylène, les résines époxydes ou de matériaux minéraux tels que le silicium, l'oxyde de silicium, le nitrure de silicium, le carbure de silicium, le silicium polycristallin, le nitrure de titane, le carbone diamant, l'oxyde d'étain et d'indium, l'aluminium.

Le liquide peut être du carbonate de propylène, de l'eau, un liquide d'indice, une huile optique telle que les huiles silicone.

Le dispositif optique peut être une lentille liquide ou un miroir à courbure ajustable.

La présente invention concerne également un dispositif de prise de vue comportant au moins un dispositif optique ainsi caractérisé.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

les figures 1A, 1B, 1C montrent des vues en coupe et une vue de dessus de dispositifs optiques à membrane déformable à actionnement électrostatique selon l'invention ;
les figures 2A, 2B, 2C montrent l'étendue de la zone sollicitée de dispositifs optiques selon l'invention ;
les figures 3A à 3D montrent différentes formes de zones sollicitées uniques de dispositifs optiques selon l'invention ;
les figures 4A à 4I montrent différentes formes d'ensembles de zones sollicitées de dispositifs optiques selon l'invention ;
les figures 5A à 5J montrent différentes variantes des moyens d'actionnement de dispositifs optiques, dans lesquelles les figures 5F, 5G et 5I montrent différentes variantes des moyens d'actionnement de dispositifs optiques selon l'invention;
les figures 6A et 6B montrent différentes configurations de l'électrode située au niveau du support de dispositifs optiques;
les figures 7A, 7B illustrent deux variantes d'un dispositif optique selon l'invention sur lequel diverses grandeurs sont chiffrées dans la description ;

les figures 8A, 8B montrent plus en détail les moyens d'actionnement électrostatiques au repos ou activés d'un dispositif optique ;

les figures 9A, 9B montrent plus en détail un autre exemple des moyens d'actionnement électrostatiques au repos ou activés ;

les figures 10A, 10B montrent un exemple de dispositif optique dans lequel le liquide déborde de la cuvette ;

les figures 11A à 11E illustrent des étapes d'un exemple de procédé de réalisation d'un dispositif optique ;

la figure 12 montre un dispositif optique doté de moyens de mesure capacitifs de l'épaisseur de liquide, qui coopèrent avec des moyens d'asservissement des moyens d'actionnement en fonction de l'épaisseur de liquide ;

la figure 13 montre un dispositif optique selon l'invention formé avec deux supports assemblés l'un à l'autre;

les figures 14A à 14F montrent différents supports de dispositifs optiques, dans lesquelles les figures 14C et 14D montrent différentes supports de dispositifs optiques selon l'invention ;

les figures 15A, 15B montrent deux dispositifs de prise de vue employant au moins un dispositif optique de l'invention ;

les figures 16A, 16B montrent des lentilles liquides conventionnelles.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

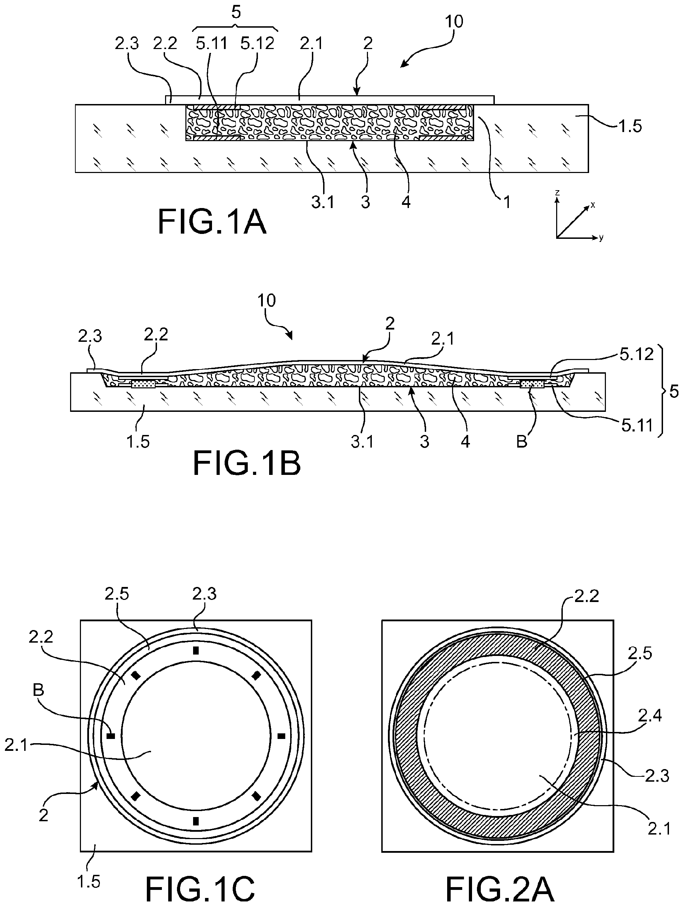

On va maintenant s'intéresser à un premier mode de réalisation d'un dispositif optique à membrane déformable selon l'invention en se référant à la figure 1A. On suppose qu'il s'agit d'une lentille liquide mais cette application n'est pas limitative, il pourrait s'agir d'un miroir à membrane déformable.

La lentille liquide 10 comporte une membrane 2 dont la périphérie est ancrée de manière étanche sur un support 1.5. La zone de la membrane qui est ancrée sur le support 1.5 est appelée zone d'ancrage et est référencée 2.3. Dans cet exemple l'ancrage se fait au niveau d'un cadre 1 du support 1.5. Le cadre 1 contribue à délimiter une cuvette 3 formée dans le support 1.5 en la bordant. La cuvette 3 est destinée à renfermer un volume constant de liquide 4. Le support 1.5 s'étend selon un plan principal x,y. La cuvette 3 possède un fond 3.1. Un faisceau optique (non représenté) est destiné à traverser la lentille liquide 10, en se propageant à travers la membrane 2, le liquide 4 et le support 1.5 au niveau du fond 3.1 de la cuvette 3. Le cadre 1 et la cuvette 3 ne sont pas nécessaires, le support 1.5 pouvant être un substrat sensiblement plan. Le fond 3.1 est transparent pour le faisceau optique utilisé.

Si le dispositif optique était un miroir à membrane déformable, la membrane serait réfléchissante, puisqu'une telle membrane est destinée à réfléchir un faisceau optique incident.

Par membrane, on entend tout film souple faisant office de barrière entre le liquide 4 et un milieu fluide se trouvant de l'autre côté de la barrière par rapport au liquide 4. Ce fluide peut être tout simplement de l'air ou un autre gaz ou même un autre liquide. La membrane 2 est en contact avec le liquide 4 d'un côté et avec le fluide de l'autre au moins au niveau d'une zone centrale 2.1 appelée champ optique aussi bien dans l'application d'une lentille liquide que d'un miroir à membrane déformable. Par la suite, on a employé parfois l'expression zone centrale parfois l'expression champ optique. Dans ce contexte, ces expressions sont équivalentes. Dans l'application lentille liquide, c'est le champ optique qui va être traversé par le faisceau optique et ce dernier est transparent pour le faisceau optique. Dans l'application miroir, la membrane est réfléchissante dans la zone centrale où le faisceau optique est incident.

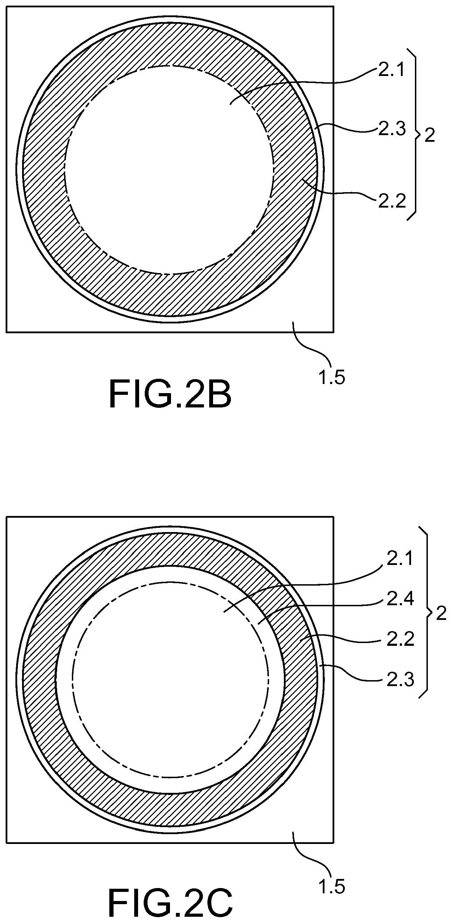

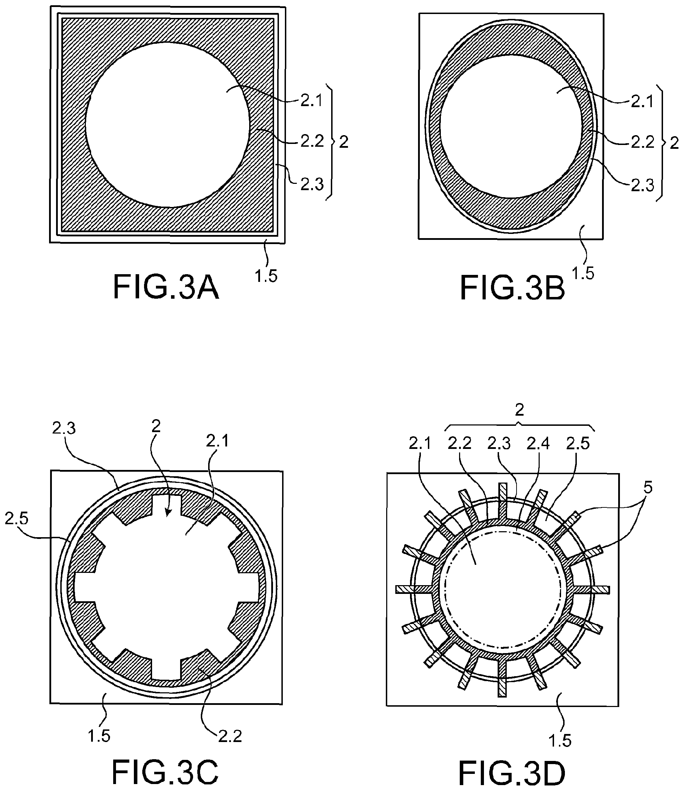

Pour pouvoir faire varier la distance focale du dispositif optique, on prévoit des moyens d'actionnement 5, formés d'au moins un actionneur électrostatique 5, qui sollicitent la membrane 2 dans une zone sollicitée 2.2 se trouvant strictement entre la zone centrale 2.1 et la zone d'ancrage 2.3. Lorsqu'il y a plusieurs actionneurs 5, chacun d'entre eux sollicite une zone 2.2 de la membrane 2. Les actionneurs 5 sont aptes à être activés de manière à prendre une position activée à partir d'une position de repos et vice versa. Le nombre de zones sollicitées dépend du nombre d'actionneurs. La zone sollicitée si elle est unique peut être continue, en forme de couronne, comme sur les figures 2. D'autres formes sont possibles comme illustré sur les figures 3A à 3D décrites ultérieurement.

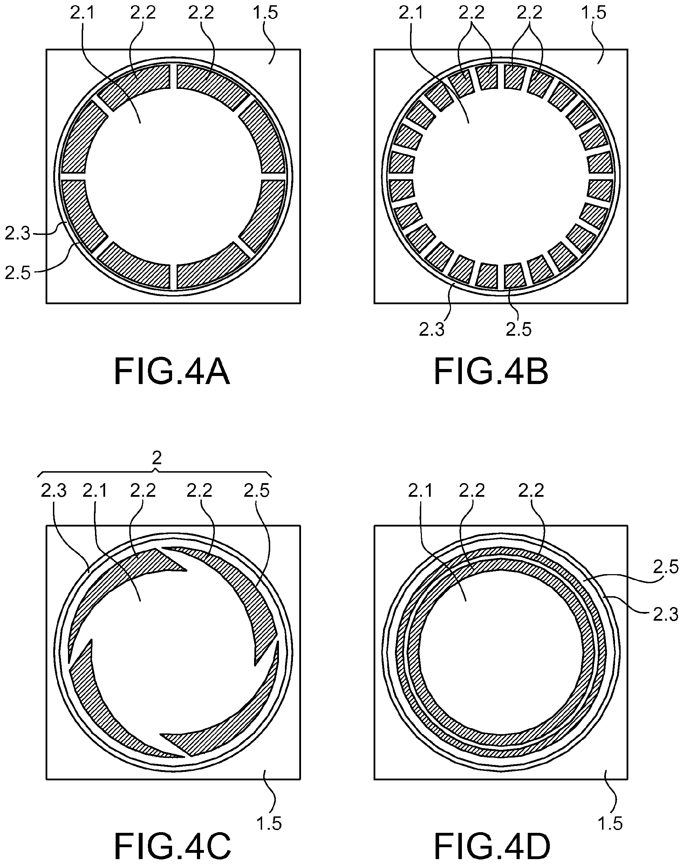

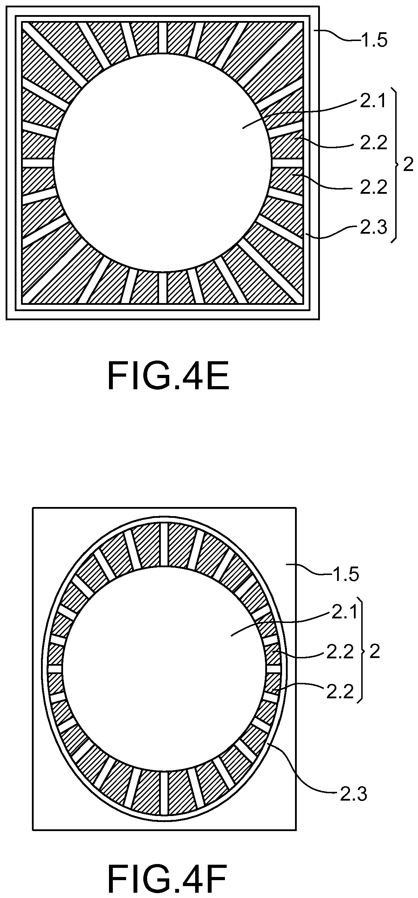

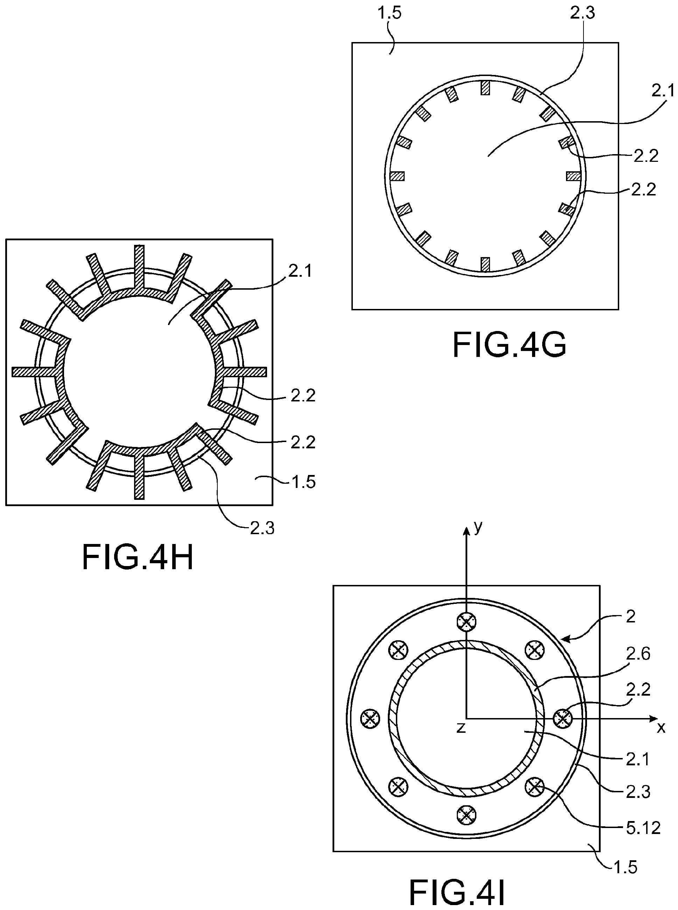

S'il y a plusieurs zones sollicitées 2.2 comme sur les figures 4, ces dernières peuvent prendre un grand nombre de formes. On a représenté plusieurs exemples de zones sollicitées entrant dans cette catégorie sur les figures 4A à 4I. L'ensemble des zones sollicitées 2.2 entoure la zone centrale 2.1. Les différentes zones sollicitées 2.2 sont de préférence réparties sensiblement régulièrement autour du champ optique 2.1. Chaque actionneur 5 comporte une paire d'électrodes 5.11, 5.12 en regard. L'une des électrodes, référencée 5.12 se trouve au niveau de la membrane 2, elle est mobile. L'autre électrode 5.11 se trouve au niveau du support 1.5, elle est fixe dans la mesure où le support est rigide au niveau de l'électrode 5.11. Lorsque le support est souple au niveau de l'électrode 5.11, cette dernière est également mobile. Les actionneurs électrostatiques sont extrêmement simples et particulièrement compacts.

Sur les figures 1A, 1B, l'électrode 5.12 est solidaire de la membrane et est aussi en contact avec la membrane 2. Le liquide diélectrique a une permittivité grande devant celle de la membrane.

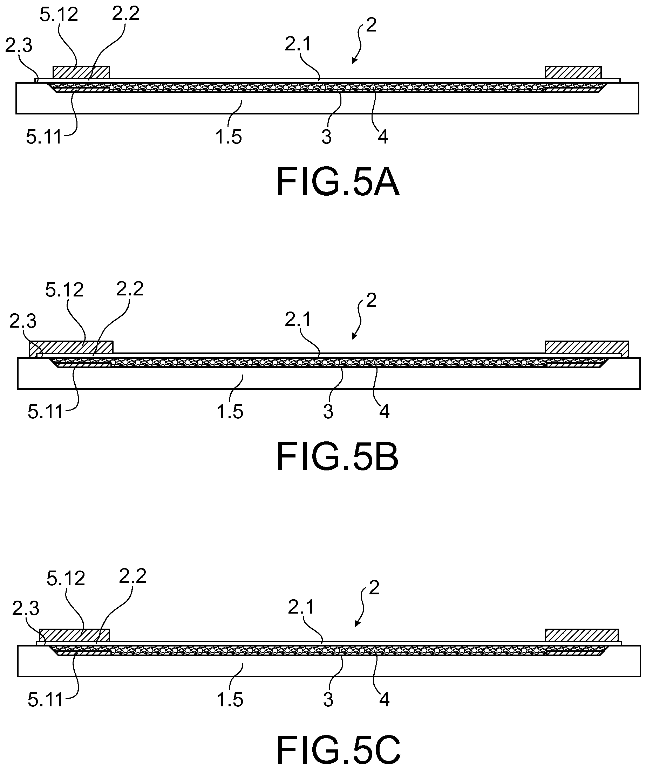

Ce n'est pas une obligation comme illustré aux figures 5A à 5E. La configuration des figures 1 est particulièrement simple et possède une bonne efficacité de la variation de la distance focale.

Il est préférable que, lorsqu'il y a plusieurs actionneurs 5, les différents actionneurs 5 soient répartis sensiblement régulièrement autour de la zone centrale 2.1 de la membrane 2 pour que le déplacement puisse se faire de manière sensiblement régulière.

Les deux électrodes 5.11, 5.12 d'un actionneur 5 sont séparées par du diélectrique, ce diélectrique étant formé au moins par le liquide 4. On peut toutefois prévoir un diélectrique supplémentaire en plus du liquide 4. Le diélectrique supplémentaire peut être formé par la membrane 2 et plus précisément la zone 2.2 de la membrane sollicitée par l'actionneur 5 comme sur la figure 1A. Le diélectrique supplémentaire est baigné par le liquide 4. La zone 2.2 de la membrane 2 sollicitée par l'actionneur 5 est calquée, sur l'une au moins des électrodes 5.11, 5.12 ou sur l'intersection entre les deux électrodes de l'actionneur. Il est bien entendu que d'autres variantes pour le diélectrique supplémentaire peuvent être envisagées comme on le verra par la suite. Le fait de prévoir un diélectrique supplémentaire en plus du liquide 4 permet d'éviter un court-circuit entre les deux électrodes 5.11, 5.12 de l'actionneur 5 dans le cas où les électrodes 5.11, 5.12 viendraient se coller l'une sur l'autre lors de l'actionnement de l'actionneur, le liquide ayant été évacué latéralement. Lors de l'actionnement d'un actionneur électrostatique, plus les électrodes sont proches, plus l'instabilité est grande, à partir d'une certaine distance les séparant, elles ont tendance à se coller l'une à l'autre brusquement.

Lorsque le liquide 4 est le seul diélectrique, il est possible de prévoir au moins une butée mécanique B visant à éviter que les deux électrodes 5.11, 5.12 viennent se coller l'une à l'autre lors de l'actionnement et créent un court-circuit. La butée est diélectrique. On se réfère aux figures 1B, 1C. Il y a plusieurs butées mécaniques B. L'épaisseur des butées mécaniques B est supérieure à la somme des épaisseurs des deux électrodes 5.11, 5.12. On peut prévoir une butée par actionneur 5. Ces butées peuvent être localisées sur le support 1.5, à proximité de l'électrode fixe 5.11. Sur la figure 1C, les électrodes ne sont pas représentées.

Dans la configuration des figures 1, la membrane 2 n'a pas besoin d'être réalisée en matériau diélectrique, elle peut être réalisée à base de silicium, de carbure de silicium, de silicium polycristallin, de nitrure de titane, de carbone diamant, d'oxyde d'étain et d'indium, d'aluminium.

Dans la configuration de la figure 5A par exemple, la membrane 2 est réalisée en matériau diélectrique et plus particulièrement organique tel que par exemple le polydiméthylsiloxane (PDMS), le polyméthacrylate de méthyle (PMMA) mais aussi le polyéthylène téréphtalate (PET), le polycarbonate (PC), le parylène, les résines époxydes, ou minéral tel que l'oxyde de silicium, le nitrure de silicium.

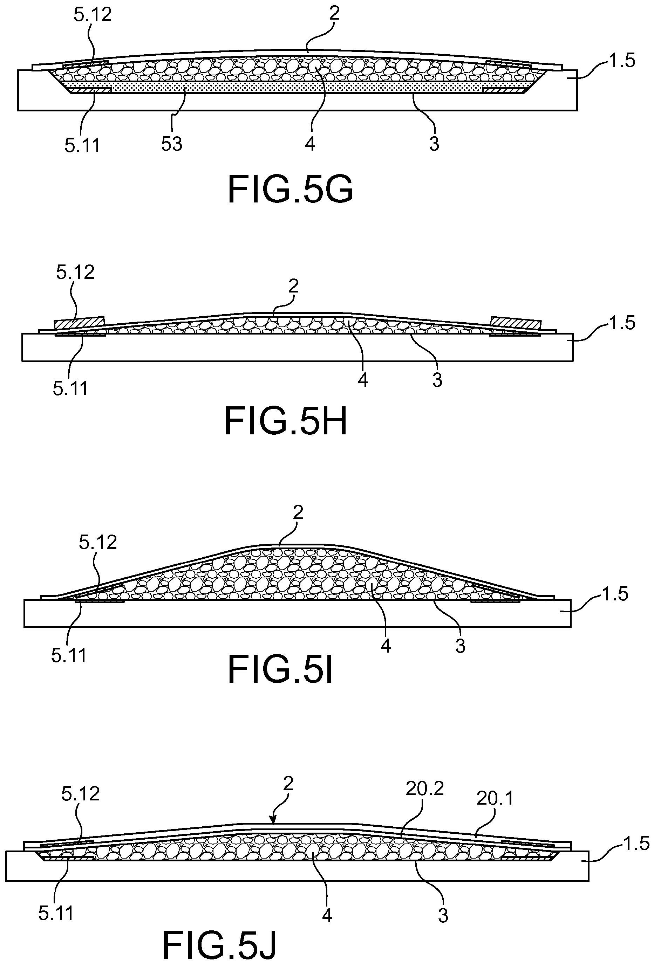

Dans l'exemple des figures 1, la membrane 2 est homogène dans le champ optique 2.1 et dans la zone sollicitée 2.2. La membrane 2 peut être monocouche dans le champ optique 2.1 et dans la zone sollicitée 2.2 comme sur la figure 1 ou être multicouche comme sur la figure 5I. Elle est formée d'au moins une couche qui est continue sur toute la surface de la de la membrane du champ optique à la zone d'ancrage.

Dans le contexte de la présente demande de brevet, le fait que la membrane soit qualifiée d'homogène dans les deux zones signifie que ses propriétés physiques sont constantes et les mêmes dans les deux zones.

Il est bien sûr envisageable que la membrane ne soit pas homogène dans le champ optique et dans la zone sollicitée, elle pourrait avoir des rigidités différentes dans ces deux zones, mais dans tous les cas, elle comporte au moins une couche continue sur toute sa surface. Le risque de fuite est ainsi réduit.

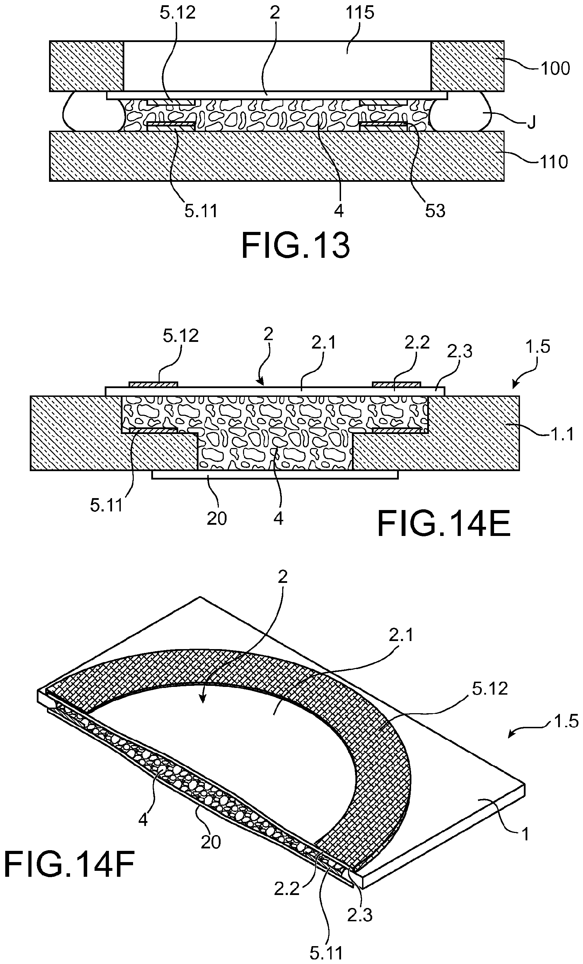

Le support 1 peut être monolithique comme sur la figure 1 ou être formé par le cadre 1 assemblé au fond 3.1 de la cuvette 3 comme sur la figure 13.

Le liquide 4 est diélectrique, cela peut être du carbonate de propylène, de l'eau, un liquide d'indice, une huile optique telle qu'une huile silicone. Il est choisi notamment pour ses propriétés diélectriques et bien sûr optiques dans le cas d'une lentille liquide.

Sur les figures 2, la membrane 2 a été représentée circulaire, mais dans d'autres formes seraient possibles, elle pourrait être oblongue, par exemple elliptique, comme sur la figure 3B ou même prendre la forme d'un quadrilatère par exemple un carré comme sur la figure 3A, ou autre.

Le principe de variation de la distance focale du dispositif optique est le suivant : sous l'effet des moyens d'actionnement 5, les électrodes 5.11, 5.12 des actionneurs s'attirent, la zone sollicitée 2.2 de la membrane en contact avec le liquide 4 s'approche du fond du support 1.5, du liquide 4 est poussé vers le centre de la membrane 2, le champ optique 2.1 se déforme à son tour et la distance focale du dispositif optique est ainsi modifiée. La conservation du volume du liquide 4 considéré comme sensiblement incompressible, piégé entre la membrane 2 et le support 1.5 régit les déformations de la membrane.

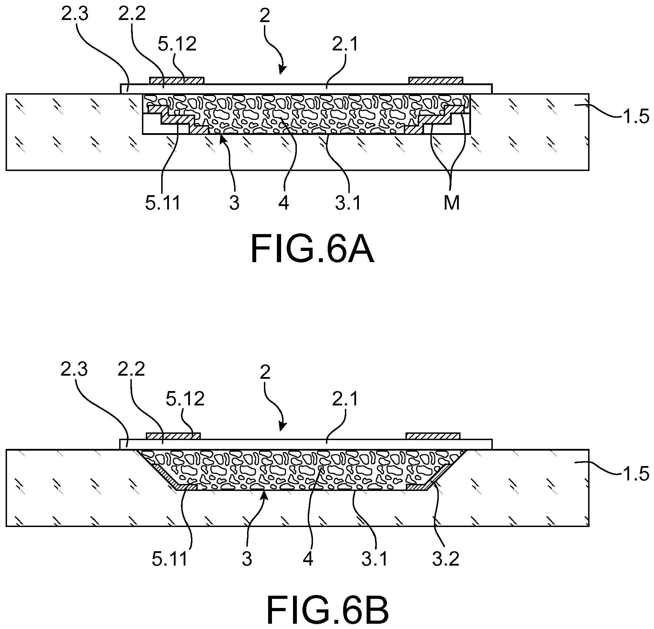

Chaque actionneur électrostatique 5 des moyens d'actionnement peut être traditionnel, c'est-à-dire avec des électrodes 5.11, 5.12 sensiblement parallèles en position de repos comme sur la figure 1, ou bien de type «zipping» ou à fermeture progressive ou par glissière, c'est-à-dire avec des électrodes inclinées l'une par rapport à l'autre en position de repos comme sur la figure 6B. L'intérêt de l'actionnement de type « zipping » est d'obtenir des débattements plus élevés qu'avec une configuration traditionnelle à électrodes sensiblement parallèles. Les paramètres déterminants pour les moyens d'actionnement 5 sont la surface de la zone sollicitée 2.2 de la membrane 2, ce qui correspond globalement à la surface de l'une au moins des électrodes 5.11, 5.12 des actionneurs et la contrainte exercée par les moyens d'actionnement 5 sur la membrane 2.

On va voir maintenant, en se reportant aux figures 2, différentes configurations possibles pour la zone sollicitée 2.2. La zone sollicitée 2.2 s'arrête dans tous les cas avant le champ optique 2.1, elle n'empiète pas sur lui. Elle peut aller jusqu'à la zone d'ancrage 2.3 mais n'empiète pas sur elle non plus puisqu'au niveau de la zone d'ancrage 2.3, il n'y a pas de liquide et la membrane ne peut se déplacer. Par contre, les moyens d'actionnement 5 peuvent être en contact avec la membrane également au niveau de la zone d'ancrage 2.3. Une zone sollicitée 2.2 est une zone déplacée par les actionneurs 5, la zone d'ancrage 2.3 ne peut être incluse dans la zone sollicitée 2.2.

Le fait que les moyens d'actionnement sollicitent la membrane dans au moins une zone sollicité localisée strictement entre la zone d'ancrage et la zone centrale permet que la zone centrale ne soit déformée que par la pression du liquide qui se déplace et que l'on obtienne une meilleure efficacité de la variation de distance focale que si la zone centrale avait été sollicitée directement par les moyens d'actionnement.

Sur ces figures 2, les moyens d'actionnement ne sont pas représentés. Sur les figures 2, il n'y a qu'une seule zone sollicitée 2.2, elle est continue en forme de couronne qui entoure le champ optique 2.1. Ce que l'on va décrire s'appliquerait aussi bien si il y en avait plusieurs. Il est possible, comme sur la figure 2B, que la zone sollicitée 2.2 commence dès la limite du champ optique 2.1. Les pointillés schématisent la limite du champ optique 2.1.

Il est bien sûr possible d'interposer une zone de garde 2.4 intermédiaire entre le champ optique 2.1 et la zone sollicitée 2.2 par les moyens d'actionnement comme sur la figure 2A et la figure 2C. Cela permet d'éviter toute dégradation des performances optiques du champ optique 2.1.

Une zone de garde 2.5 intermédiaire peut être interposée entre la zone sollicitée 2.2 et la zone d'ancrage 2.3 comme sur la figure 2A. Elle se trouve au dessus du liquide 4. La zone sollicitée 2.2 peut atteindre la zone d'ancrage 2.3 sans empiéter sur elle comme sur la figure 2B et la figure 2C. Il n'y a plus de zone de garde 2.5 intermédiaire.

Les figures 3A, 3B montrent respectivement des configurations de membrane carrée ou oblongue, dans ce cas en ellipse. Dans ces deux configurations, le champ optique 2.1 est circulaire. La zone sollicitée 2.2 est limitée intérieurement par un cercle et extérieurement respectivement par un carré ou une ellipse.

Sur la figure 3C, la membrane 2 est circulaire, la zone sollicitée 2.2 unique prend la forme d'une couronne munie de doigts radiaux, se projetant vers le champ optique 2.1. Ces doigts prennent la forme de secteurs de couronne, mais d'autres formes sont possibles, cette forme n'est pas limitative. Il y a une zone de garde 2.5 entre la zone sollicitée 2.2 et la zone d'ancrage 2.3.

Sur la figure 3D, la membrane 2 est circulaire, la zone sollicitée 2.2 est unique, elle est en forme de couronne du côté du champ optique 2.1 et la couronne est munie de doigts radiaux qui se projettent vers la zone d'ancrage 2.3. Les doigts sont en forme de bande mais d'autres formes sont possibles. Il y a une zone de garde 2.5 intermédiaire morcelée entre la couronne de la zone sollicitée 2.2 et la zone d'ancrage 2.3 entre les doigts radiaux. Les moyens d'actionnement électrostatiques 5, prenant la forme d'un actionneur unique, occupent la zone sollicitée 2.2 et se continuent sur la zone d'ancrage 2.3 et sur le support 1.5, ils prolongent les doigts radiaux au au-delà de la zone sollicitée 2.2. La surface de contact de l'actionneur 5 avec la zone d'ancrage 2.3 et avec le support 1.5 est représentée avec des hachures différentes de celles de la zone sollicitée 2.2. La partie de l'actionneur correspond à une portion de l'électrode mobile en contact avec la membrane qui se prolonge sur le support 1.5.

Jusqu'à maintenant, on n'a décrit que des configurations avec une seule zone sollicitée 2.2, ce qui voulait dire que les moyens d'actionnement ne comportaient qu'un seul actionneur.

Les moyens d'actionnement 5 peuvent comprendre plusieurs actionneurs aptes à être actionnés simultanément. Dans ce cas, la membrane comporte plusieurs zones sollicitées.

On va donc s'intéresser à des configurations de la membrane 2 pour lesquelles il y a plusieurs zones sollicitées 2.2 et donc plusieurs actionneurs. Sur la figure 4A, les zones sollicitées 2.2 sont des secteurs de couronne, dans l'exemple non limitatif la couronne est circulaire. Il y en a 8 sur la figure 4A et 24 sur la figure 4B. Un nombre différent de zones sollicitées 2.2 est bien sûr possible. Sur la figure 4C, les zones sollicitées 2.2 sont des portions de croissants dont le bord extérieur est une portion de cercle concentrique avec le bord de la membrane 2. Il y a quatre zones sollicitées 2.2 sensiblement identiques. On pourrait envisager qu'elles ne soient pas identiques. Sur la figure 4D, les zones sollicitées 2.2 sont des couronnes concentriques. Il y en a deux. On pourrait envisager que l'une au moins d'entre elle soit munie de doigts radiaux de manière similaire aux figures 3C, 3D. Cette variante n'est pas représentée pour ne pas multiplier inutilement le nombre de figures. Sur ces deux dernières figures, il y a une zone de garde 2.5 intermédiaire entre la zone d'ancrage 2.3 et la zone sollicitée 2.2.

Sur la figure 4E, les zones sollicitées 2.2 sont des portions de secteurs angulaires limités intérieurement par le champ optique 2.1, dans cet exemple circulaire, et extérieurement par le bord du support 1.5 recevant la zone d'ancrage 2.3 qui dans cet exemple est carré. Les secteurs angulaires ont sensiblement le même angle au sommet mais ce n'est pas une obligation.

Sur la figure 4F, dans la même optique, les zones sollicitées 2.2 sont des portions de secteurs angulaires limités intérieurement par un cercle qui correspond au champ optique et extérieurement par une ellipse qui correspond au bord du support 1.5 recevant la zone d'ancrage 2.3. Dans ces deux exemples, les différentes zones sollicitées 2 ne sont pas toutes identiques.

Sur la figure 4G, les zones sollicitées 2.2 sont des bandes radiales qui s'arrêtent juste avant la zone d'ancrage 2.3.

Sur la figure 4H, les zones sollicitées 2.2 sont des portions de couronne munies de doigts radiaux. Cette configuration ressemble à celle de la figure 3D à l'exception qu'il n'y a pas qu'une seule zone sollicitées mais plusieurs. Dans cet exemple les doigts radiaux se projettent vers la zone d'ancrage 2.3, mais on pourrait imaginer qu'ils se projettent vers le champ optique 2.1. Cette dernière variante n'est pas représentée dans le souci de ne pas multiplier inutilement les figures.

Il est préférable de prévoir, lorsqu'il y a une pluralité de zones sollicitées 2.2 voisines et que la pluralité des zones sollicitées 2.2 forme une couronne discontinue autour du champ optique 2.1, entre les zones sollicitées 2.2 et le champ optique 2.1 une zone de renfort 2.6 plus rigide que le champ optique 2.1. La zone de renfort 2.6 entoure le champ optique 2.1, elle est continue. Les moyens d'actionnement ne la sollicitent pas directement. Les moyens d'actionnement ont été matérialisés par les électrodes 5.12 en contact avec la membrane 2 de chacun des actionneurs. La fonction de la zone de renfort 2.6 est d'uniformiser la déformation de la membrane 2 dans le champ optique 2.1 lors de l'activation des moyens d'actionnement. La zone de renfort 2.6 assure l'invariance par rotation de la déflection de la membrane engendrée par l'actionnement des moyens d'actionnement autour de l'axe z qui est un axe de symétrie. On peut se référer à la figure 4I. Les zones sollicitées 2.2 sont sensiblement polygonales.

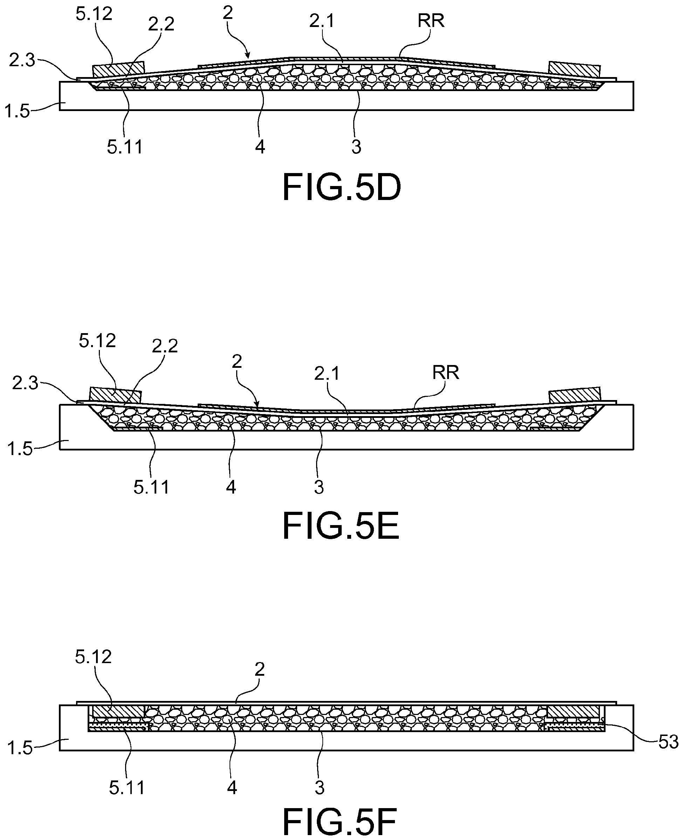

Sur les figures 5, on a illustré différentes configurations pour les moyens d'actionnement 5. Sur la figure 5A, les moyens d'actionnement 5 ont une emprise sur la membrane 2, via leur au moins une électrode 5.12 en contact avec la membrane, seulement au niveau de la zone sollicitée 2.2 ou des zones sollicitées s'il y en a plusieurs. Sur la figure 5C, les moyens d'actionnement 5, via leur au moins une électrode 5.12 en contact avec la membrane, ont une emprise sur la membrane 2 au niveau de la zone sollicitée 2.2 (ou des zones sollicitées s'il y en a plusieurs) et aussi au niveau de la zone d'ancrage 2.3.

Sur la figure 5B, l'électrode 5.12 est en contact avec la membrane 2 au niveau de la zone sollicitée 2.2 et de la zone d'ancrage 2.3 mais elle s'étend aussi sur le support 1.5 au-delà de la membrane 2. La partie de l'électrode 5.12 qui se trouve sur le support 1 .5 au-delà de la membrane 2 peut servir de plot d'alimentation électrique pour les moyens d'actionnement 5.

Sur les figures 5A, 5B, 5C, l'électrode 5.12 mobile se trouve sans contact avec le liquide 4, elle est sur la face avant de la membrane 2, si la face arrière est celle qui est en contact avec le liquide 4.

Dans ces configurations, les zones sollicitées 2.2 correspondent aux zones de la membrane 2 qui sont à la fois en contact les actionneurs électrostatiques 5 et en contact avec le liquide.

Sur les figures 5A à 5C, les moyens d'actionnement 5 sont représentés au repos.

La membrane 2 peut être plane lorsque les moyens d'actionnement 5 sont au repos comme sur les figures 5A à 5C. La cuvette 3 est nécessaire. Cela correspond à un rayon de courbure infini. Dans cette configuration avec cuvette 3, les électrodes sont sensiblement parallèles au repos. Cette configuration est avantageuse pour déplacer efficacement le liquide vers la zone centrale, et donc pour avoir une variation efficace de la distance focale. Il est bien sûr possible que la membrane 2 soit bombée dans un sens ou dans l'autre alors que les moyens d'actionnement 5 sont au repos. Elle possède alors un rayon de courbure fini et donc plus petit. Les figures 5D et 5E illustrent cette configuration avec respectivement une membrane 4 en dôme (concave) et une membrane 4 en cuvette (convexe). On suppose que sur les figures 5D, 5E la membrane est réfléchissante et que le dispositif optique est un miroir. On a représenté sur la face avant de la membrane 2, au moins au niveau de la zone centrale 2.1 un revêtement réfléchissant RR qui peut être par exemple une fine couche d'aluminium.

La cuvette 3 est représentée. Sur ces deux figures, les actionneurs sont de type « zipping », les électrodes 5.11, 5.12 n'étant pas parallèles en position de repos. Sur ces deux dernières figures, on suppose que la membrane est réfléchissante au moins dans le champ optique et que le dispositif optique est un miroir à rayon de courbure ajustable.

Les exemples présentés aux figures 5A à 5E, montraient des moyens d'actionnement 5 qui coopèrent avec la face avant de la membrane 2, c'est-à-dire celle qui est opposée à celle en contact avec le liquide 4. Il est bien sûr possible que les moyens d'actionnement 5 coopèrent avec la membrane 2 au niveau de sa face en contact avec le liquide 4 comme on l'a déjà vu.

Sur la figure 5F, l'électrode 5.12 est en contact avec la membrane 2 mais aussi avec le liquide 4. Elle est sur la face arrière de la membrane 2. La membrane 2 ne sert plus alors de diélectrique supplémentaire. On peut prévoir comme diélectrique supplémentaire 53, une couche de matériau diélectrique qui masque l'autre électrode 5.11 (celle qui est fixe) vis-à-vis du liquide 4. Le matériau diélectrique peut être par exemple de l'oxyde de silicium par exemple ou du nitrure de silicium. Si ce matériau diélectrique supplémentaire ne fait que tapisser les électrodes 5.11 en contact avec le support 1.5, il n'a pas besoin d'être réalisé en matériau transparent dans l'application d'une lentille liquide, puisque on est hors du champ optique.

Lorsqu'ils sont actionnés depuis la position de repos, les actionneurs 5 doivent tirer la membrane 2 pour rapprocher la zone sollicitée 2.2 du fond 3.1 de la cuvette 3 ou plus généralement pour réduire l'épaisseur du liquide 4. Sur cette figure 5F, la membrane 2 est homogène, elle a une même épaisseur et une même rigidité entre le champ optique 2.1 et la zone sollicitée 2.2.

Sur la figure 5G, l'électrode 5.12 solidaire de la membrane 2 est intégrée dans la membrane 2. Elle est toujours en contact avec le liquide 4. L'épaisseur de la membrane 2 dans la zone sollicitée 2.2 par les moyens d'actionnement 5 est moindre que celle dans le champ optique 2.1. Dans la zone sollicitée 2.2, la rigidité de la membrane est inférieure à celle qu'elle possède au niveau du champ optique 2.1. L'épaisseur de la zone sollicitée 2.2 combinée à celle de l'électrode 5.12 est sensiblement celle du champ optique 2.1. Sur cette figure 5G, l'électrode 5.12 vient aussi en contact avec le support 1.5, la membrane 2 surmonte l'électrode 5.12 et vient aussi en contact sur le support 1.5.

Le diélectrique supplémentaire 53 tapisse tout le fond 3.1 de cuvette 3 ou plus généralement le support devant être en contact avec le liquide 4. Dans ce cas, si le dispositif optique est une lentille liquide, le diélectrique supplémentaire 53 doit être transparent pour qu'elle puisse fonctionner en transmission. Le terme transparent signifie bien sûr transparent pour le faisceau optique utilisé. Pour un fonctionnement en réflexion, cette condition n'est pas nécessaire.

La cuvette 3 n'est pas nécessaire comme on l'a déjà évoqué. Il est possible que le liquide 4 repose sur un support 1.5 sensiblement plan et que la membrane 2 vienne l'emprisonner. La demande de brevet EP-A-1 672 394 illustre une telle configuration de membrane emprisonnant du liquide. Cette variante est représentée sur les figures 5H et 5I, l'électrode 5.12 solidaire de la membrane 2 se trouvant soit sur la face avant de la membrane 2 soit sur la face arrière. Dans ces configurations, la membrane 2 est bombée lorsque les moyens d'actionnement 5 sont au repos. La membrane 2 peut être réalisée par dépôt d'un film organique, par exemple du parylène, directement sur une goutte de liquide 4, ou par ou par un procédé utilisant une couche sacrificielle. Le support 1.5 peut éventuellement être traité localement pour le rendre hydrophile ou hydrophobe selon les zones.

Sur la figure 5J, l'électrode 5.11 est enterrée dans la membrane 2, elle est prise en sandwich entre deux sous-couches 20.1, 20.2 de la membrane 2. La sous-couche 20.2 de la membrane 2 qui est en contact avec le liquide 4 peut servir de diélectrique supplémentaire, si bien sûr elle est en matériau diélectrique. L'autre sous-couche 20.1 complète la tenue mécanique de la première sous-couche 20.2 pour que la membrane 2 ait les performances requises dans le champ optique.

On va s'intéresser maintenant à différentes configurations pour l'autre électrode 5.11 des actionneurs 5, celle qui est en contact avec le support 1.5.

On se réfère aux figures 6A, 6B. Sur la figure 6A, le fond 3.1 de la cuvette 3 possède des marches M, dans l'exemple non limitatif au nombre de trois, et l'électrode 5.12 qui est en contact avec le support tapisse ces marches M.

Sur la figure 6B, la cuvette 3 a un fond 3.1 et un flanc 3.2 incliné et l'électrode 5.11 en contact avec le support 1.5 tapisse à la fois le fond 3.1 et le flanc 3.2 de la cuvette 3. Dans cette configuration, les électrodes d'un actionneur sont inclinées lorsqu'il est au repos, il est de type « zipping ».

Le dimensionnement de la membrane 2 est guidé par le comportement qu'elle aura dans le champ optique 2.1, puisque la variation de la distance focale du dispositif optique dépend directement du déplacement du champ optique.

On choisit le matériau de la membrane 2 pour que sa limite élastique soit suffisante pour lui garantir un fonctionnement dans le domaine élastique et une réversibilité de déformation. Elle doit revenir à sa position initiale une fois qu'elle a été déformée, par activation des moyens d'actionnement 5 lorsque ceux-ci sont revenus à une position de repos. De nombreux matériaux organiques mais aussi minéraux peuvent entrer dans la composition de la membrane. Ils doivent pouvoir assurer l'étanchéité pour emprisonner le liquide 4 notamment au niveau de l'ancrage. Selon les applications et les structures, ils doivent être transparents pour la longueur d'onde utilisée dans le cas d'un fonctionnement en transmission ou doivent être réfléchissants, dans le cas d'un miroir. Ils doivent être diélectriques ou au contraire électriquement conducteurs comme on le verra ultérieurement.

Comme matériau organique, on peut choisir par exemple le polydiméthylsiloxane (PDMS), le polyméthacrylate de méthyle (PMMA) mais aussi le polyéthylène téréphtalate (PET), le polycarbonate (PC), le parylène, les résines époxydes, dont le module d'Young est compris entre quelques 100 MPa et quelques GPa. Comme matériaux minéraux diélectriques on peut choisir par exemple l'oxyde de silicium, le nitrure de silicium, le carbure de silicium. Comme matériau conducteur, on peut choisir par exemple l'oxyde d'indium et d'étain ITO qui est transparent dans le visible ou l'aluminium qui lui est réfléchissant. D'autres matériaux ont été cités précédemment. On verra plus loin une configuration du dispositif optique selon l'invention dans laquelle la membrane est à la fois électriquement conductrice et est soit transparente, soit réfléchissante.

Pour un bon fonctionnement du dispositif optique à distance focale variable de l'invention, il est souhaitable que ses performances optiques soient garanties indépendamment de son orientation.

Pour ce faire, la pression induite par le poids du liquide 4 sur la membrane 2 dans le champ optique 2.1, à cause de la pesanteur, ne doit pas engendrer de déformation dégradant ses performances optiques.

Le profil de la membrane 2 influe fortement sur la forme du dioptre du champ optique. Pour un profil plan, c'est-à-dire pour une épaisseur de la membrane sensiblement constante sur toute sa surface, la forme du dioptre peut être approximée par la formule suivante extraite de l'ouvrage "Théorie des plaques et des coques" de S. Timoshenko, éditeur Librairie Polytechnique, Ch Béranger, 1951. On obtient :

$$\omega(r) = \omega_0 \times \left(1 - \frac{r^2}{a^2}\right)^2$$

où $\omega(r)$ représente la déformation de la membrane (ou déformée) en fonction de la distance r de son centre (qui est aussi le centre optique de la lentille), a représente son rayon et $\omega_0$ sa flèche maximale en son centre.

L'approximation réalisée est de considérer la membrane comme ancrée à sa périphérie et soumise à une pression constante. En terme de déformée, le profil réel du dioptre demande à être déterminé plus précisément par exemple à l'aide d'un logiciel de simulation mécanique comme ANSYS par exemple. La déformée réelle se situera vraisemblablement entre la déformée approchée et une déformée sphérique.

En faisant varier l'épaisseur de la membrane et la nature de la contrainte exercée par les moyens d'actionnement, on peut faire varier la déformée et donc changer la forme du dioptre et la distance focale.

Le comportement mécanique de la membrane dépend notamment de la surface de la zone sollicitée 2.2 par les moyens d'actionnement 5. On s'arrange pour que la rigidité de la membrane 2 dans le champ optique 2.1, c'est à dire les paramètres E, $\nu$ et h, soit en accord avec la surface de la zone sollicitée 2.2 par les moyens d'actionnement 5 et avec la force que développent les moyens d'actionnement 5. En effet, la pression exercée par le liquide 4 sur le champ optique 2.1 multipliée par la surface totale de la membrane en contact avec le liquide est égale en première approximation, en considérant le liquide comme incompressible, à la force électrostatique entre les électrodes des actionneurs ou de l'actionneur.

Le comportement mécanique de la membrane dans le champ optique dépend de la flèche maximale de la membrane, de la force appliquée par les moyens d'actionnement 5, de leur débattement et de la surface de la zone sollicitée 2.2. Plusieurs itérations peuvent être nécessaires pour adapter le comportement mécanique du champ optique 2.1 avec les grandeurs listées plus haut.

Pour arriver à un compromis intéressant, on doit choisir d'abord un ou plusieurs matériaux pour la membrane en fonction de la variation de la distance focale souhaitée et de la géométrie du champ optique, du procédé de réalisation de la membrane et des moyens d'actionnement, de l'épaisseur de la membrane, plusieurs épaisseurs pouvant être étudiées. On doit déterminer ensuite la pression maximale dans le champ optique. On optimise la surface de la zone sollicitée en se plaçant dans le cas le plus favorable où la zone sollicitée est continue et homogène autour du champ optique, en comparant les contraintes et débattements nécessaires pour l'actionnement afin d'obtenir la variation de distance focale recherchée compatible avec la technologie de l'actionnement retenue, en tenant compte de l'encombrement global que l'on cherche à réduire. Si on arrive sur une impasse, on recommence les itérations en changeant de matériaux pour la membrane.

Les candidats en termes de matériaux étant nombreux, l'épaisseur de la membrane peut varier de manière significative, la pression maximale requise peut donc être ajustée de façon judicieuse.

Lorsqu'il y a plusieurs zones sollicitées, le nombre de zones sollicitées est aussi un paramètre important pour l'élaboration du dispositif optique objet de l'invention. Chacune de ces zones est pilotée par un actionneur dédié à cette zone.

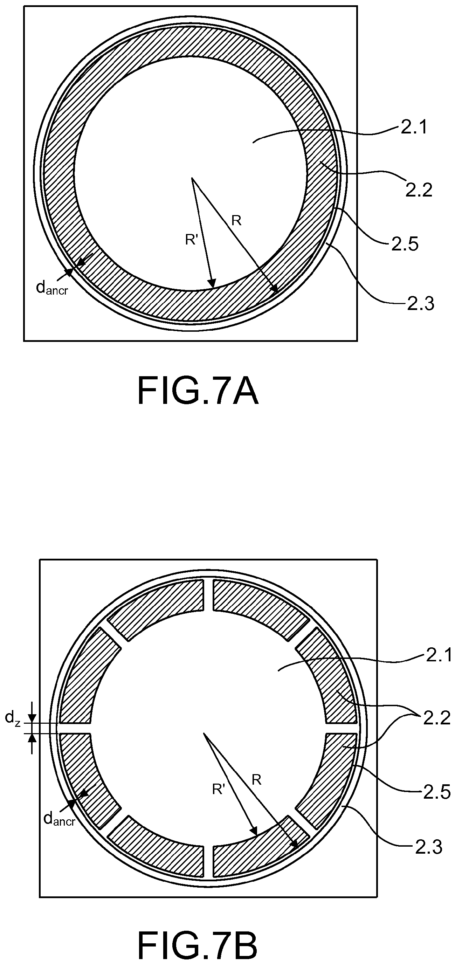

Deux paramètres sont importants lorsqu'il y a plusieurs zones sollicitées 2.2, il s'agit de la distance $d_z$ séparant deux zones sollicitées consécutives 2.2 d'une part et de la distance $d_{ancr}$ entre les zones sollicitées et l'ancrage au support 1.5 d'autre part. Les distances $d_z$ et $d_{ancr}$ sont illustrées sur les figures 7A, 7B.

On cherche à ce que ces distances $d_z$ et $d_{ancr}$ ne soient pas trop grandes ou ne s'appliquent pas à des portions de membrane trop souples, puisque ces portions doivent résister à la pression exercée par les moyens d'actionnement 5 au niveau de zones sollicitées voisines. Ces portions ne doivent pas non plus être trop rigides pour ne pas entraver le déplacement de zones sollicitées 2.2 voisines. On cherche à ce qu'elles se comportent de manière aussi proche que possible des zones sollicitées 2.2.

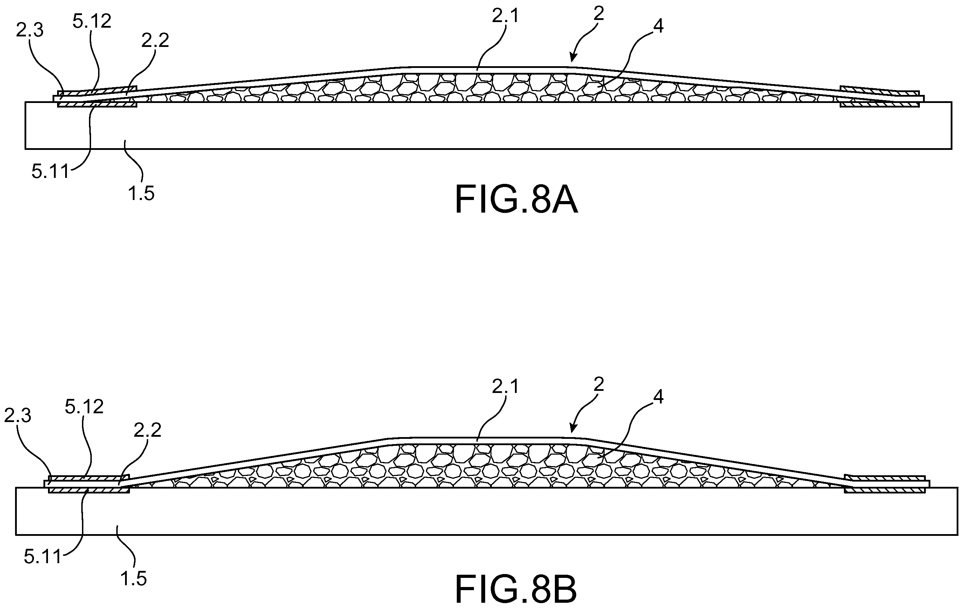

En ce qui concerne les moyens d'actionnement électrostatiques 5, ils ne posent pas de problème à un homme du métier. On peut se référer à la publication suivante en ce qui concerne des actionneurs électrostatiques de type «zipping» : « A novel external electrode configuration for electrostatic actuation of MEMS based devices » Journal of Micromechanics and microengineering N°14 (2004) pages 446 à 451. Dans cet article, il est mentionné à la figure 8 que des poutres de 400 micromètres permettent d'obtenir un débattement tout à fait compatible à celui qui est requis dans dispositif optique selon l'invention.

Un exemple typique de moyens d'actionnement électrostatiques de type «zipping» est représenté de manière détaillée sur les figures 8A, 8B. Les moyens d'actionnement 5 sont formés de plusieurs actionneurs 5, on en voit deux diamétralement opposés sur les figures 8. Ils comportent chacun une électrode fixe 5.12 portée par le support 1.5 et une électrode mobile 5.11 portée par la membrane 2, la membrane servant d'isolant électrique supplémentaire entre les deux électrodes 5.11, 5.12 en plus du liquide 4. La zone sollicitée 2.2 de la membrane 2 correspond à l'emprise qu'a l'électrode mobile 5.12 sur la membrane 2. Sous l'effet d'une différence de potentiel appliquée entre les deux électrodes 5.11, 5.12, l'électrode mobile 5.12 vient s'approcher de l'électrode fixe 5.11 et elle déplace la membrane 2 pour la faire se rapprocher du support 1.5. Le déplacement de la membrane chasse, vers le champ optique 2.1, le liquide 4 emprisonné entre la membrane 2 et le support 1.5 au niveau de la zone sollicitée 2.2. La figure 8A montre les moyens d'actionnement 5 au repos et la figure 8B les moyens d'actionnement 5 activés. La membrane 2 est incluse dans les moyens d'actionnement 5 puisqu'elle sert d'isolant électrique entre les deux électrodes 5.11, 5.12. Sur ces figures, il n'y a pas de cuvette, le support 1.5 est sensiblement plan. Le liquide 4 et la membrane contribuent à l'actionnement des moyens d'actionnement. Ils sont diélectriques. Plus la permittivité du liquide 4 et de la membrane 2 est grande, plus le rapprochement de l'électrode mobile 5.12 vers l'électrode fixe 5.11 s'amorcera facilement et donc meilleures seront les performances de l'actionnement. Les paramètres à prendre en compte pour le liquide et le diélectrique supplémentaire sont leur permittivité et leur tension de claquage. Elles doivent être suffisamment grandes.

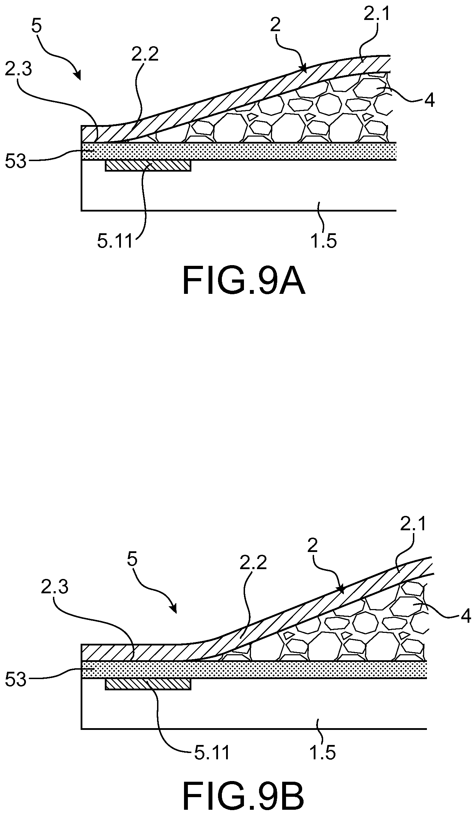

En variante illustrée aux figures 9A, 9B, la membrane 2 est maintenant en matériau électriquement conducteur. Les électrodes fixes 5.11 sont portées par le support 1.5. Ce sont elles qui imposent la forme de la zone sollicitée. Une couche diélectrique 53 les recouvre, cette couche diélectrique 53 peut tapisser le support 1.5 de manière à être en contact avec le liquide 4 et à s'étendre au niveau du champ optique du dispositif optique. En variante, cette couche diélectrique peut être localisée et épargner le champ optique. La couche diélectrique 5.3 peut être par exemple en oxyde de silicium ou en nitrure de silicium, si le support 1.5 est en verre. La membrane 2 est réalisée dans un matériau électriquement conducteur, par exemple en oxyde d'étain et d'indium. Ce matériau est couramment utilisé dans les dispositifs à cristaux liquides pour faire des électrodes. La membrane 2 fait office d'électrode mobile, c'est plus précisément la portion de la membrane 2 qui est face à l'électrode fixe 5.11 qui a ce rôle. La zone sollicitée 2.2 par les moyens d'actionnement 5 correspond à l'emprise qu'à l'électrode fixe 5.11 sur la membrane 2. La figure 9A montre les moyens d'actionnement 5 au repos et la figure 9B les moyens d'actionnement 5 activés. La membrane 2 est incluse dans les moyens d'actionnement 5 puisqu'elle sert d'électrode mobile.

La membrane 2 peut être formée par exemple d'un film de PET (polyéthylène téréphtalate) recouvert d'un film d'ITO (oxyde d'étain et d'indium). L'ITO se trouve côté liquide 4. La membrane peut être appliquée par laminage du film.

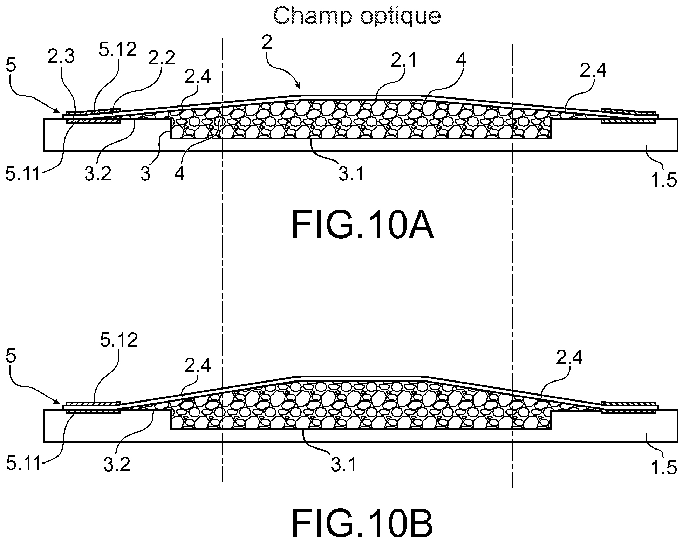

En variante des figures 8 où le support était sensiblement plan, il peut être intéressant de bénéficier d'une cuvette 3 tout en conservant, au niveau des moyens d'actionnement 5, du liquide 4. L'ancrage de la membrane 2 sur le support 1.5 se fait assez loin de la cuvette 3, la zone sollicitée 2.2 et donc des moyens d'actionnement 5 sont au niveau du bord 3.2 de la cuvette 3, le liquide 4 déborde de la cuvette 3 et s'étend sur le bord 3.2 de la cuvette 3, tout en étant emprisonné par la membrane 2. On se rapporte aux figures 10A, 10B. On a prévu une zone de garde 2.4 entre la zone sollicitée 2.2 et le champ optique 2. La figure 10A montre les moyens d'actionnement 5 au repos et la figure 10B montre les moyens d'actionnement 5 activés. Cette configuration allie les avantages de la configuration sans cuvette avec support sensiblement plan et les avantages de la configuration avec cuvette au niveau du champ optique.

L'avantage d'utiliser des moyens d'actionnement électrostatiques est qu'ils sont peu sensibles aux chocs. En cas de choc, le poids du liquide déforme la membrane, et comme la membrane est dimensionnée pour résister à ces déformations, les moyens d'actionnement n'ajoutent pas d'autre contrainte supplémentaire. L'encombrement peut être réduit au minimum.

Un tel dispositif optique selon l'invention peut être fabriqué à l'aide de technologies employées en microélectronique et dans les microsystèmes. On peut employer à la fois pour la membrane et les moyens d'actionnement des techniques de dépôts de couches minces par dépôt chimique en phase vapeur (CVD), par électrodéposition, par épitaxie, par oxydation thermique, par dépôt physique en phase gazeuse (PVD), ou encore par évaporation. On peut également utiliser les techniques de laminage de films, de dépôt à la tournette pour les matériaux organiques ou sol gel, de moulage, gaufrage à chaud (hot embossing en anglais), de nano impression (nano print en anglais), de collage de deux substrats par collage direct, par collage eutectique, par collage anodique, par collage organique.

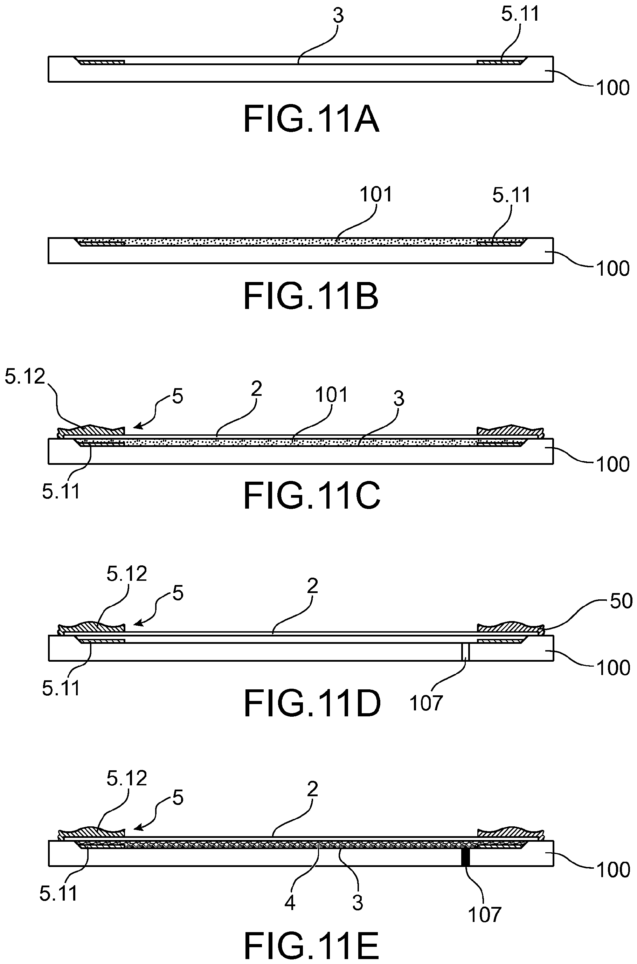

On va maintenant s'intéresser à un exemple de procédé de fabrication d'un dispositif optique à distance focale variable selon l'invention. On va utiliser une couche sacrificielle. On se reporte aux figures 11A à 11E.

On part d'un substrat 100 dans lequel une cuvette 3 a été gravée. Le substrat 100 peut être par exemple en verre. On dépose en fond de cuvette une ou plusieurs électrodes fixes 5.11 (figure 11A). On dépose dans la cuvette 3 et sur les électrodes fixes un matériau sacrificiel 101 (figure 11B). Le matériau sacrificiel 101 peut être organique, une résine photosensible par exemple, ou un matériau minéral tel que de l'oxyde de silicium.

On forme la membrane 2 sur le matériau sacrificiel 101, de manière à ce qu'elle déborde sur le bord de la cuvette 3 et s'y ancre (figure 11C). On peut déposer un matériau minéral tel que l'oxyde de silicium, le nitrure de silicium. Ce matériau est diélectrique. Le dépôt peut se faire à la tournette ou par dépôt chimique en phase vapeur. On forme sur la membrane 2, localement une ou plusieurs électrodes mobiles 5.12 visant à compléter les moyens d'actionnement 5. On libère ensuite la membrane 2 en éliminant le matériau sacrificiel 101. Pour cela, on peut percer au moins un trou 107 traversant dans le substrat 100 jusqu'à atteindre le matériau sacrificiel 101. Le trou 102 est traversant et débouche dans la cuvette 3 (figure 11D). L'élimination peut être chimique ou thermique ou par plasma d'oxygène. On remplit ensuite la cuvette 3 avec le liquide 4 (figure 11E). Le remplissage peut se faire en mettant la cuvette 3 en dépression pour favoriser la pénétration du liquide 4 et éviter la formation de bulles. Enfin on rebouche le trou 107 pour que le liquide 4 ne puisse pas s'échapper (figure 11E). On peut utiliser un matériau organique. L'ordre des étapes n'est pas limitatif.

Les électrodes mobiles 5.12 pourraient également être formées après la libération de la membrane 2 par exemple, avant le remplissage ou après. Il est également possible de les former sur la couche sacrificielle 101 avant de former la membrane 2, si elles doivent se trouver côté liquide 4. Dans une telle configuration, il se peut que les électrodes mobiles 5.12 soient déposées à cheval sur le matériau sacrificiel 101 et sur le substrat 100 et que la membrane 2 surmonte totalement ou partiellement les électrodes mobiles 5.12.

Sur les figures 11, on a représenté les électrodes mobiles 5.12 en contact avec le substrat 100, ce n'est pas une obligation, elles auraient pu ne pas déborder de la membrane 2.

Si l'on désire que la membrane 2 au repos soit bombée, concave ou convexe, on donne une courbure appropriée à la couche sacrificielle 101, puisqu'elle sert de moule à la membrane 2. Une autre solution pour obtenir une membrane 2 bombée serait de la faire flamber après l'avoir libérée. Le flambage peut être thermique. Les paramètres déterminants sont alors la différence de coefficient de dilatation thermique entre la membrane et le substrat et la température de dépôt de la membrane.

Pour protéger la membrane 2 il est possible que le dispositif optique de l'invention soit réalisé par l'assemblage de deux supports, un premier support 110 supportant la membrane 2 et une ou plusieurs électrodes mobiles 5.12 et le second support 100 supportant une ou plusieurs électrodes fixes 5.11 et le liquide 4. Le premier support 110 fait office de protection mécanique du dispositif optique de l'invention. Un joint J de colle est utilisé pour assembler les deux supports 100, 110 et emprisonner le liquide 4 dans la cavité qu'il contribue à délimiter. Les électrodes fixes 5.11 sont revêtues par le diélectrique supplémentaire 53. Le premier support 110, est évidé dans sa partie centrale, cet évidement 115 correspondra au moins au champ optique 2.1 de la membrane 2 une fois l'assemblage des supports 100, 110 réalisé. On se réfère à la figure 13.

Nous allons maintenant décrire en terme de géométrie une configuration avantageuse de la membrane d'un dispositif optique à distance focale variable selon l'invention. On suppose que le liquide 4 repose sur un fond plan. On se réfère à la figure 7A. La membrane est circulaire, son champ optique 2.1 est circulaire et toutes les zones qui l'entourent, y compris la zone sollicitée 2.2, sont des couronnes concentriques.

On utilise le modèle de plaque circulaire uniformément chargée, ancrée sur sa périphérie et soumise à des flèches importantes par rapport à l'épaisseur de la plaque, pour calculer les caractéristiques de la membrane, ce modèle est présenté dans l'ouvrage de S. Timoshenko cité plus haut.

La flèche maximale $\omega_0$ du champ optique est donnée par la formule

$$\omega_0 = \frac{Pa^4}{64D} \cdot \frac{1}{1 + 0.488\frac{\omega_0^2}{h^2}} \quad \text{avec} \quad D = \frac{Eh^3}{12(1 - v^2)}$$

où P est la pression exercée sur le champ optique, a est le rayon du champ optique, E est le module d'Young du matériau constitutif de la membrane dans le champ optique, $v$ est le coefficient de Poisson du matériau constitutif de la membrane dans le champ optique, h est l'épaisseur de la membrane dans le champ optique.

Le champ optique 2.1 peut avoir un diamètre de 2,5 mm, il n'y a pas de zone de garde entre le champ optique 2.1 et la zone sollicitée 2.2, mais il y une zone de garde 2.5 intermédiaire entre le champ optique 2.1 et la zone d'ancrage 2.3. La largeur de la zone d'ancrage vaut 200 micromètres. La zone sollicitée 2.2 est comprise entre un rayon intérieur R' de 1,25 mm et un rayon extérieur R variant entre 1,35 et 2,05 millimètres. La surface de la zone sollicitée 2.2 varie ainsi entre 0,8 et 8,3 millimètres au carré. On suppose que la membrane est en parylène, que son épaisseur est de 1 micromètre et que la flèche maximale recherchée dans la zone centrale du champ optique est de 20 micromètres. La force exercée par les moyens d'actionnement selon l'axe z varie entre 0,2 et 0,4 mN. A partir de cette force, pour remonter à la tension à appliquer entre les électrodes, il suffit de se reporter aux ouvrages de l'état de l'art traitant des forces électrostatiques tel que par exemple « Simulations based Design for a Large Displacement Electrostatically Actuated Microrelay », Gooi Boon Chong et al., Proceeding of SPIE, vol. 4408 (2001), pages 254-262.

Le débattement de la zone sollicitée 2.2 varie entre 3 micromètres pour une surface de 8,3 mm$^2$ et 7 micromètres pour une surface de 0,8 mm$^2$. La largeur $d_{ancr}$ de la zone de garde 2.5 intermédiaire peut aller jusqu'à 0,2 mm.

En reprenant toutes les approximations faites et en affinant le dimensionnement, soit expérimentalement soit par simulations mécaniques et optiques, il est probable que les forces et débattement pourront être réduits, ce qui simplifiera le dimensionnement des moyens d'actionnement et rendra le dispositif optique encore plus compact.

Un autre exemple numérique est présenté ci-dessous. On se réfère à la figure 7B. La seule différence avec la figure 7A est que maintenant, on prévoit plusieurs zones sollicitées 2.2 qui sont en fait huit secteurs de couronne circulaire disposés autour de la zone centrale 2.1. Les différents secteurs de couronne circulaire sont espacés d'une distance $d_z$ valant quelques dizaines à quelques centaines de micromètres. La surface de la zone sollicitée 2.2 s'exprime par :

$$\pi(R^2-1,25^2)-8d_z(R-1,25)$$

La distance $d_z$ ne doit pas entraver le bon fonctionnement de la variation de la distance focale.

Un compromis doit être fait entre le nombre de zones sollicitées 2.2 et leurs surfaces et donc l'encombrement des moyens d'actionnement. Le choix du nombre de zones sollicitées 2.2 dépend également de la capacité des moyens d'actionnement à actionner de manière sensiblement identique chacune des zones sollicitées et de la nature de la contrainte exercée par les moyens d'actionnement.

Il se peut que des aberrations optiques apparaissent avec un dispositif optique selon l'invention. Elles sont liées au manque de parallélisme entre le bord de la membrane 2 déformée et le support 1.5 au niveau de l'ancrage. Elles se traduisent par une flèche maximum $\omega_o$ qui n'est plus au centre du champ optique 2.1. L'axe optique du dispositif optique passe par le centre du champ optique 2.1. La qualité des images est détériorée.

Pour limiter un tel phénomène dans les lentilles liquides conventionnelles, on cherchait à optimiser l'assemblage de la membrane au support, cet assemblage était basé sur des techniques de scellement afin qu'au repos le parallélisme requis soit obtenu. Mais ensuite lorsque la lentille est en fonctionnement, on peut être amené à faire varier sa distance focale grâce à une tension d'alimentation V0 utilisée pour actionner les moyens d'actionnement 5. Si le déplacement induit par les moyens d'actionnement 5 n'est pas homogène sur toute la périphérie de la lentille liquide, le phénomène apparaît et la qualité de l'image est dégradée. L'espace entre le fond 3.1 de la cuvette 3 et la zone sollicitée 2.2 de la membrane 2 n'est pas constant sur toute la périphérie de la membrane. Cette anomalie peut également se produire dans un dispositif optique selon l'invention si on ne fait rien lors de la commande des moyens d'actionnement 5. Lorsque les moyens d'actionnement comportent plusieurs actionneurs 5, ils peuvent ne pas être alimentés avec exactement la même tension V0. Une dérive de la course de certains actionneurs 5 peut se produire. La pression du liquide 4 peut ne pas être totalement uniforme sur toute la périphérie de la membrane, cela peut se produire si le dispositif est employé légèrement incliné d'un côté. En fonctionnement, le phénomène est donc difficile à maîtriser et pénalise fortement ce type de dispositif optique. Afin de lutter contre cet effet, il est possible de prévoir un contrôle de la commande des moyens d'actionnement 5.

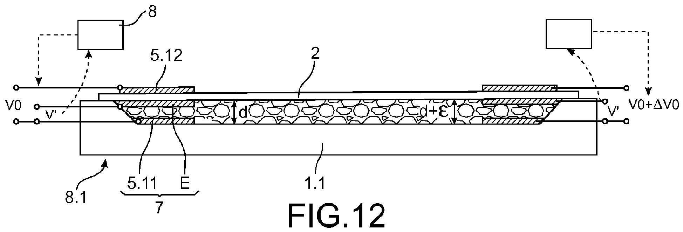

On se réfère à la figure 12. La variation de la distance focale du dispositif optique est toujours obtenue grâce à l'action des moyens d'actionnement 5 électrostatiques lorsqu'ils sont actionnés, par application d'une tension d'alimentation V0 entre l'électrode fixe 5.11 et l'électrode mobile 5.12. On prévoit de plus des moyens d'asservissement 8 de la tension à appliquer aux moyens d'actionnement 5 en fonction de l'épaisseur d du liquide au niveau de la zone sollicitée 2.2. Les moyens d'asservissement 8 coopèrent avec des moyens de mesure 8.1 capacitifs de l'épaisseur du liquide, disposés en plusieurs endroits au niveau de la ou les zones sollicitées 2.2, de préférence au niveau des actionneurs 5. Les moyens de mesure 8.1 peuvent comporter plusieurs couples 7 d'électrodes répartis au niveau de la zone sollicitée 2.2 ou des zones sollicitées 2.2. Il est possible qu'au moins une électrode d'un couple soit confondue avec une électrode fixe 5.11 des moyens d'actionnement 5. L'autre électrode E d'un couple 7 est située sur la membrane 2, côté liquide 4. En variante, il est possible que les deux électrodes d'un couple soient confondues avec les deux électrodes d'un actionneur. Encore une autre configuration serait de dissocier actionneur et couple 7 d'électrodes des moyens de mesure 8.1. En appliquant une différence de potentiel V' sur les deux électrodes 5.11, E de chaque couple 7 d'électrodes 5.11, E et en mesurant la capacité sur chaque couple 7 d'électrodes 5.11, E, on acquiert au niveau de chacun des couples 7 d'électrodes 5.11, E la quantité de liquide 4 se trouvant entre les électrodes 5.11, E et donc l'épaisseur de liquide entre la membrane 2 et le fond 3.1 de la cuvette 3.

Sur la figure 12, on n'a fait que schématiser les moyens d'asservissement 8, de plus on ne les voit que pour deux couples d'électrodes 5.11, E et deux actionneurs 5 pour ne pas surcharger la figure.

Lors du fonctionnement du dispositif optique objet de l'invention, si on obtient des mesures capacitives qui diffèrent d'un endroit à un autre, par exemple d, d+ε, les moyens d'asservissement 8 reçoivent les mesures capacitives des moyens de mesure 8.1, les comparent à une valeur de référence qui correspond ici à l'espacement d mesuré par ailleurs, et commandent qu'une tension supplémentaire de correction ΔV0, en plus de la tension de référence V0, soit appliquée aux actionneurs 5 correspondants, aux endroits où la mesure capacitive diffère de la valeur de référence. On uniformise ainsi toutes les mesures capacitives à la valeur de référence et donc toutes les distances entre la membrane 2 et le fond 3.1 de la cuvette 3, en ajustant les tensions d'alimentation des actionneurs 5.

Le parallélisme nécessaire au bon fonctionnement de la lentille ou du miroir est ainsi garanti par un asservissement en déplacement. Cet asservissement ne pose pas de problème à l'homme du métier.

Lorsque l'on souhaite faire varier la distance focale du dispositif optique, on applique une tension V0 sur tous les actionneurs 5 des moyens d'actionnement comme représenté sur la figure 12, on mesure grâce aux moyens de mesure 8.1, l'espace d entre la membrane 2 et le fond 3.1 de la cuvette 3, les mesures sont délivrées aux moyens d'asservissement 8. Si un ou plusieurs couples 7 d'électrodes 5.11, E détecte un décalage parasite ε, les moyens d'asservissement 8 commandent l'application de la tension supplémentaire de correction ΔV0 à un ou plusieurs actionneurs 5 les plus proches des couples 7 d'électrodes ayant détecté le décalage parasite ε. La tension d'alimentation supplémentaire de correction ΔV0 appliquée à un ou plusieurs actionneurs 5 fait qu'ils déplacent localement la membrane 2 pour que le décalage ε s'annule.

Le nombre de couples 7 d'électrodes est fonction du nombre d'actionneurs 5 et de leurs points de contact avec la membrane 2, de la surface et de la rigidité de la zone sollicitée 2.2. La position des couples 7 d'électrodes est également à optimiser en fonction des points de contacts des actionneurs 5. L'objectif étant de pouvoir compenser les décalages relevées par les couples 7 d'électrodes, il semble opportun de placer un couple 7 d'électrodes au niveau de chaque actionneur 5. La configuration dans laquelle les électrodes d'un couple d'électrodes des moyens de mesure sont confondues avec les électrodes d'un actionneur est particulièrement avantageuse car particulièrement simple et bon marché. Il serait bien sûr envisageable de placer les couples 7 d'électrodes entre les actionneurs 5 mais l'asservissement serait plus difficile à réaliser.

La surface des électrodes 5.11, E est directement liée à l'épaisseur du liquide 4 au repos et plus l'épaisseur du liquide 4 est importante, plus la surface des électrodes 5.11, E est grande.

Concernant leur dimensionnement, il faut également intégrer la précision nécessaire au bon fonctionnement du dispositif optique. En effet, la capacité C du condensateur plan formé par les électrodes 5.11, E en regard s'exprime par $C = \varepsilon'S'/e$ avec S' surface des électrodes, e épaisseur du liquide et ε' permittivité du liquide. La charge du condensateur Q s'exprime par $Q = CV'$ avec V' différence de potentiel appliquée aux électrodes du condensateur. Il vient $Q = \varepsilon'S'V'/e$. Pour V et ε' donnés, plus S' est grande et plus e est petite plus Q est grande et donc plus les électrodes 5.11, E sont sensibles. Compte tenu des performances visées pour le dispositif optique, un décalage maximum εmax entre les électrodes peut être toléré sans avoir un impact sur la qualité de l'image. La précision de mesure des couples d'électrodes doit être inférieure à εmax.

Pour les applications visées d'autofocus et de zoom, la distance focale du dispositif optique est à modifier avec une grande rapidité, c'est-à-dire une grande fréquence pour garantir un temps de réponse aussi court que possible. Dans une application d'appareil photo ou de caméra, pour plusieurs distances focales que prend le dispositif optique lors d'une variation de la distance focale, on utilisera le capteur d'image qui est présent pour faire un test d'image jusqu'à ce que la distance focale recherchée soit trouvée. Dans un tel fonctionnement dynamique, les mesures capacitives sont relevées plusieurs fois pour une distance focale donnée. En effet, plusieurs cycles d'acquisition des mesures capacitives, de comparaison avec une valeur de référence, de traitement de données et de commande des actionneurs, sont nécessaires pour chaque valeur de distance focale afin de garantir la qualité optique recherchée. Il faut donc que la fréquence d'acquisition des mesures capacitives soit largement supérieure à la fréquence de variation de la distance focale.

Toute la partie de traitement du signal associée à ce contrôle du déplacement par mesures capacitives est à optimiser afin de diminuer le temps de réponse de la lentille liquide tout en garantissant une uniformité de déplacement, dans la limite acceptable pour les performances optiques. Cela ne pose pas de problème à un homme du métier.

La variation de la distance focale est pilotée par la force délivrée par les moyens d'actionnement 5 mais contrôlée en déplacement grâce aux moyens d'asservissement 8. Un tel contrôle du déplacement et donc de la déformation de la membrane permet d'améliorer considérablement la qualité optique du dispositif optique.

Les effets indésirables de l'orientation d'utilisation du dispositif optique de l'invention sont éliminés par deux facteurs : d'une part la limitation du volume de liquide 4 et donc la minimisation du poids de liquide 4 et d'autre part le contrôle du déplacement de la membrane 2 grâce à la mesure capacitive.

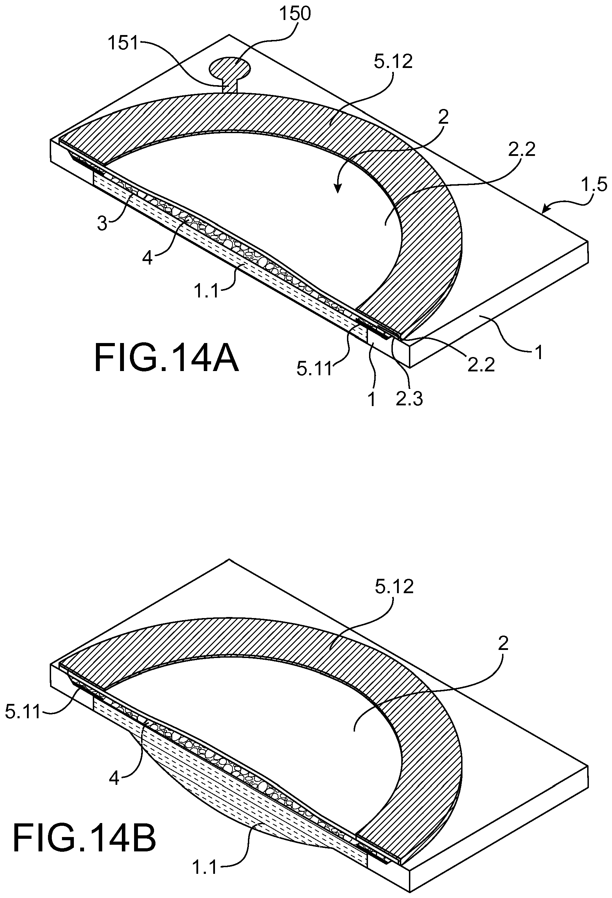

On va voir maintenant d'autres modes de réalisation d'un dispositif optique qui ne fait pas partie de l'invention de type lentille liquide. On se réfère aux figures 14A à 14E. Sur la figure 14A, le support 1.5 de la membrane 2 est maintenant formé d'un cadre 1 solidaire d'une plaque 1.1 pour former la cuvette 3. La plaque 1.1 matérialise le fond de la cuvette 3, elle est transparente. Il n'y a pas de modification au niveau de la membrane 2, ni au niveau des moyens d'actionnement électrostatiques 5, ni au niveau du liquide 4 par rapport à ce qui a été décrit précédemment.

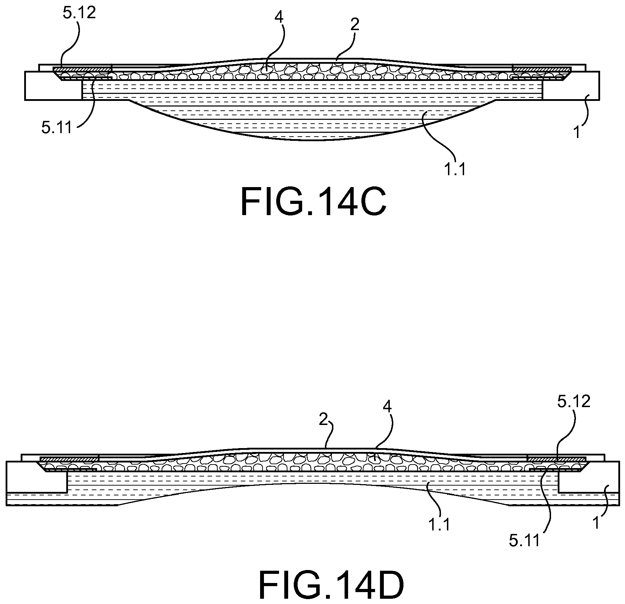

La plaque transparente 1.1 peut être d'épaisseur sensiblement constante, à faces sensiblement parallèles planes, comme sur la figure 14A. Au moins une face pourrait être structurée comme sur les figures 14B, 14C, 14D, où la face extérieure est convexe ou concave. Le choix se fait en fonction des performances optiques recherchées. Elle laisse passer un rayonnement optique qui traversera la lentille. Le cadre 1 peut être en matériau semiconducteur tel que le silicium, ce qui le rend apte à intégrer les circuits associés au traitement de la commande des moyens d'actionnement surtout si un asservissement est prévu. Les circuits ne sont pas représentés pour ne pas surcharger les figures. Par contre sur la figure 14A, on a représenté un plot d'alimentation 150 et une piste conductrice 151 reliées électriquement à l'électrode mobile 5.12 des moyens d'actionnement 5, cette piste 151 et ce plot 150 étant utilisés lors de l'actionnement pour appliquer la tension appropriée à l'électrode mobile 5.12. La piste et le plot associés à l'électrode fixe ne sont pas visibles, mais l'homme du métier n'a aucune difficulté à les concevoir. Ces plots et ces pistes ont été omis sur les figures précédentes dans le but de ne pas surcharger les figures, mais ils sont bien évidemment prévus. La plaque transparente 1.1 peut être en verre ou en matière plastique.

Sur les figures 14B, 14C, la plaque transparente 1.1 est à structure convexe et sur la figure 14D, elle est à structure concave. La structuration de la plaque 1.1 transparente peut être obtenue par usinage ou par moulage par exemple.

Sur la figure 14E, le support 1.5 est matérialisé par le cadre 1 et la plaque transparente 1.1 est remplacée par une seconde membrane 20. Les deux membranes 2, 20 sont ancrées sur le cadre 1, chacune sur une de ses faces principales. Elles contribuent à réaliser un logement pour le liquide 4. Cela permet d'accroître les performances optiques de la membrane. Les moyens d'actionnement électrostatiques 5 sont prévus sur l'une seule des membranes 2. L'électrode fixe 5.11 est placée sur une marche du cadre 1.1. Les trois zones de la membrane 2 munie des moyens d'actionnement sont représentées. L'autre membrane 20 n'est pas actionnée, mais elle se déforme quand même lorsque les moyens d'actionnement 5 sont actionnés.

En variante représentée sur la figure 14F, il est possible de prévoir, pour chaque actionneur une électrode en contact avec une membrane 2 et une électrode en contact avec l'autre membrane 20. Dans cette configuration les moyens d'actionnement 5 comportent un seul actionneur. Dans cette configuration les deux membranes 2, 20 sont actionnées, et l'électrode 5.11 ne peut plus être qualifiée d'électrode fixe. Elle est solidaire du support 1.5 incluant le cadre 1 et la seconde membrane 20.

Un tel dispositif optique à distance focale variable est beaucoup plus simple que ceux existant, notamment lorsqu'il ne comporte qu'une seule membrane. En plus des avantages de simplicité, de compacité de fabrication et de coût, la fiabilité de l'ensemble est ainsi optimisée en particulier car le risque de fuites est limité.

L'échelle à laquelle est réalisée le dispositif optique objet de l'invention peut être beaucoup plus petite que celle à laquelle sont réalisées les lentilles liquides traditionnelles. Les techniques de fabrication sur tranche étant précises et répétables, les quantités de liquide peuvent donc être diminuées, de l'ordre que quelques centièmes de mm$^3$ à quelques mm$^3$. Cet avantage permet de s'affranchir de deux problèmes classiques qui sont l'effet des variations de température et de pression sur le fonctionnement du dispositif optique et sa tenue aux chocs. En effet, en minimisant la quantité de liquide, dans une lentille à volume constant, les phénomènes de dilatation de ce liquide sous l'effet de variations de température et de pression sont limités.

En outre, plus le volume de liquide est faible et plus la tenue aux chocs du dispositif optique est améliorée. En effet, la masse de liquide est moindre et sollicite moins la membrane en cas de chocs.

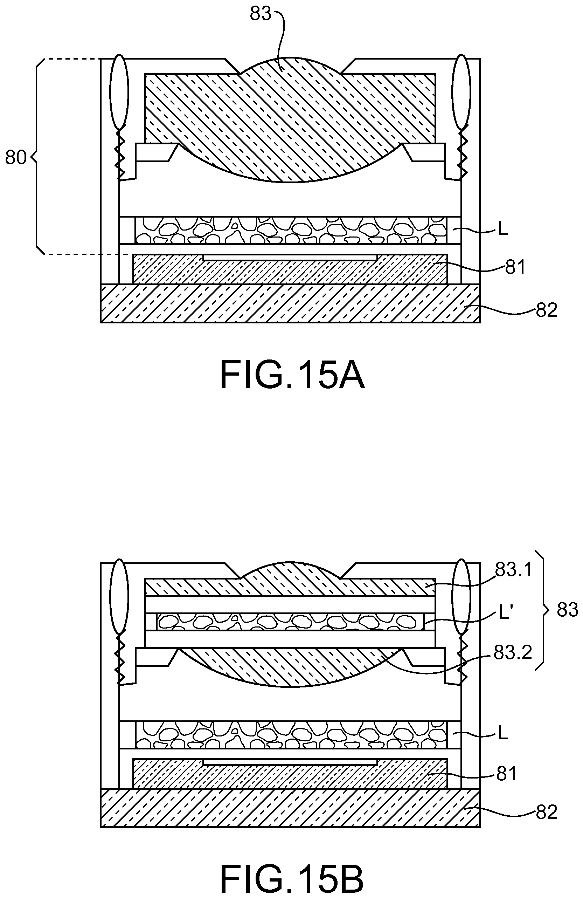

Un tel dispositif optique à distance focale variable peut être employé dans un dispositif de prise de vue notamment celui d'un appareil photo de téléphone portable. On se réfère à la figure 15A. Un tel dispositif de prise de vue comporte en cascade, un objectif 80 incluant au moins un dispositif optique à distance focale variable L selon l'invention de type lentille liquide, un capteur d'image 81 par exemple de type CCD ou CMOS porté par un substrat 82. Dans l'exemple décrit, l'objectif 80 comporte au moins une lentille 83 à distance focale fixe et une lentille liquide L selon l'invention. Par la suite cette lentille à distance focale fixe 83 sera appelée bloc optique conventionnel. La lentille liquide L se trouve entre le bloc optique conventionnel 83 et le capteur d'image 81. En variante le bloc optique conventionnel 83 peut se trouver entre la lentille liquide L et le capteur d'image 81. Le bloc optique conventionnel 83 est statique. Comme on l'a vu précédemment, de par son procédé de fabrication, la lentille liquide L peut être assimilée à un MOEMS (microsystème optoélectromécanique). La lentille liquide L à focale variable est placée à une certaine distance, qui dépend des caractéristiques de l'objectif 80, du capteur d'image 81, mais si cette distance est petite, la lentille liquide L et le capteur d'image 81 ne pourront faire qu'un seul composant en les intégrant soit en technologie AIC (abréviation anglo-saxonne de Above Integrated Circuit pour au-dessus du circuit inégré), soit en technologie WLCSP (abréviation anglo-saxonne de Wafer Level Chip Scale Package soit sur tranche à l'échelle de la puce). La distance focale de la lentille liquide L est adaptée en optimisant la pression du liquide au repos, mais aussi la courbure de la membrane au repos et l'indice de réfraction du liquide.

Si le dispositif de prise de vue inclut également la fonction zoom comme sur la figure 15B, on utilisera, un bloc optique 83 avec au moins deux lentilles à distance focale fixe 83.1, 83.2 et deux lentilles liquides L et L' dont l'une se trouve entre les deux lentilles 83.1, 83.2 du bloc optique 83 et l'autre à proximité du capteur d'image 81 comme sur la figure 15B.

Bien que plusieurs modes de réalisation de la présente invention aient été décrits de façon détaillée, on comprendra que différents changements et modifications puissent être apportés sans sortir du cadre de l'invention et notamment bien d'autres procédés peuvent être utilisés pour réaliser la membrane et les moyens d'actionnement.

**Revendications**

1. Dispositif optique à membrane déformable (2) comportant une zone d'ancrage (2.3) sur un support (1.5) contribuant à emprisonner un volume constant d'un liquide unique (4) en contact avec l'une de ses faces dite face arrière, une zone sensiblement centrale (2.1), apte à se déformer de manière réversible depuis une position de repos, des moyens d'actionnement (5) pour déplacer le liquide (4) au niveau de la zone centrale (2.1), sollicitant la membrane dans au moins une zone (2.2) située strictement entre la zone centrale (2.1) et la zone d'ancrage (2.3), **caractérisé en ce que** les moyens d'actionnement (5) sont électrostatiques et comportent au moins une paire d'électrodes en vis à vis, l'une des électrodes de la paire étant mobile et intégrée au moins en partie dans la face arrière de la membrane en étant en contact avec le liquide, l'autre étant au niveau du support, ces électrodes (5.11, 5.12) étant séparées par du diélectrique, le diélectrique étant formé au moins du liquide (4) ceci de manière à permettre la génération d'une force électrostatique entre les électrodes (5.11, 5.12) de la paire lorsqu'une tension leur ai appliquée afin de déplacer l'électrode mobile et ainsi permettre de solliciter la membrane dans la zone sollicitée (2.2) en chassant le liquide vers la zone centrale (2.1).

2. Dispositif optique selon la revendication 1, dans lequel le diélectrique est formé en plus du liquide d'un diélectrique supplémentaire (53) disposé sur au moins une des électrodes en vis-à-vis, ce diélectrique étant en contact avec le liquide (4).

3. Dispositif selon l'une des revendications précédentes, dans lequel la membrane (2) est homogène entre le champ optique (2.1) et la zone sollicitée (2.2).

4. Dispositif selon l'une des revendications précédentes, dans lequel la zone sollicitée (2.2) s'étend jusqu'à la zone centrale (2.1) sans empiéter sur elle ou s'arrête avant la zone centrale et/ou la zone sollicitée s'étend jusqu'à la zone d'ancrage (2.3) sans empiéter sur elle ou s'arrête avant la zone d'ancrage.

5. Dispositif optique selon l'une des revendications précédentes, dans lequel une paire d'électrodes (5.11, 5.12) coopère avec une butée mécanique (B) visant à éviter que les deux électrodes de la paire viennent en contact lors de l'actionnement.

6. Dispositif optique selon l'une des revendications précédentes, dans lequel la membrane (2) est monocouche ou multicouche et comporte au moins une couche continue (20.2) qui occupe toute la surface de la membrane.

7. Dispositif optique selon l'une des revendications précédentes, dans lequel lorsqu'il y a une seule zone sollicitée (2.2), la zone sollicitée (2.2) entoure la zone centrale (2.1) et lorsqu'il y a plusieurs zones sollicitées (2.2), elles entourent chacune la zone centrale (2.1) ou l'ensemble des zones sollicitées (2.2) entoure la zone centrale (2.1).

8. Dispositif optique selon l'une des revendications précédentes, dans lequel la zone sollicitée (2.2) est une couronne ou une portion de couronne éventuellement munie de doigts radiaux se projetant vers la zone d'ancrage (2.3) ou vers la zone centrale (2.1).

9. Dispositif selon l'une des revendications précédentes, dans lequel plusieurs zones sollicitées (2.2) forment une couronne discontinue autour de la zone centrale (2.1), la membrane comportant en outre une zone de renfort continue (2.6) entourant la zone centrale (2.1), plus rigide que les zones sollicitées, située entre la zone centrale et les zones sollicitées.

10. Dispositif optique selon l'une des revendications précédentes, dans lequel le support (1.5) est sensiblement plan ou possède une cuvette (3) pour accueillir le liquide (4).

11. Dispositif optique selon l'une des revendications précédentes, dans lequel le support comporte une cuvette (3) avec un fond et un flanc incliné, l'électrode (5.11) au niveau du support s'étendant sur le fond et le flanc.

12. Dispositif optique selon l'une des revendications précédentes, dans lequel le support (1.5) comporte un cadre (1) et une seconde membrane (20) ancrée sur le cadre, l'électrode (5.11) située au niveau du support (1.5) étant en contact avec la seconde membrane (20).

13. Dispositif optique selon l'une des revendications 1 à 12, dans lequel le support (1.5) comporte un cadre (1) et une plaque transparente (1.1) fixée au cadre contribuant à former une cuvette (3) pour le liquide (4), la plaque transparente ayant des faces sensiblement planes et parallèles ou une face externe à la cuvette sensiblement concave ou une face externe à la cuvette sensiblement convexe.

14. Dispositif optique selon l'une des revendications précédentes, dans lequel le support (1.5) comporte deux substrats (100, 110) assemblés l'un à l'autre, la membrane (20) étant solidaire de l'un des substrats (100), l'électrode (5.11) située au niveau du support étant solidaire de l'autre substrat (110).

15. Dispositif optique selon l'une des revendications précédentes, dans lequel des moyens capacitifs (5.11, E) de mesure de l'épaisseur de liquide (4) sont prévus au niveau de la zone sollicitée (2.2), ils peuvent être confondus ou partiellement confondus avec les électrodes des moyens d'actionnement (5).

16. Dispositif optique selon la revendication 15, comportant des moyens d'asservissement (8) des moyens d'actionnement (5) en fonction de l'épaisseur de liquide (4) mesurée.

17. Dispositif optique selon l'une des revendications précédentes, dans lequel c'est une lentille liquide ou un miroir.

18. Dispositif de prise de vue **caractérisé en ce qu'**il comporte au moins un dispositif optique (L, L') selon l'une des revendications précédentes.

**Patentansprüche**

1. Optische Vorrichtung mit einer verformbaren Membran (2), die eine Verankerungszone (2.3) auf einem Träger (1.5) umfasst, die dazu beiträgt, ein konstantes Volumen einer einzigen Flüssigkeit (4), die in Kontakt mit einer ihrer Flächen, der sogenannten Rückfläche, ist, einzuschließen, eine im Wesentlichen zentrale Zone (2.1), die in der Lage ist, sich aus einer Ruheposition reversibel zu verformen, Betätigungsmittel (5) zum Bewegen der Flüssigkeit (4) in der zentralen Zone (2.1), Anregen der Membran in mindestens einer Zone (2.2), die sich genau zwischen der zentralen Zone (2.1) und der Verankerungszone (2.3) befindet, **dadurch gekennzeichnet, dass** die Betätigungsmittel (5) elektrostatisch sind und mindestens ein Paar gegenüberliegender Elektroden umfassen, wobei eine der Elektroden des Paares beweglich ist und zumindest teilweise in die Rückseite der Membran integriert ist, wobei sie mit der Flüssigkeit in Kontakt steht, während sich die andere am Träger befindet, wobei diese Elektroden (5.11, 5.12) durch ein Dielektrikum getrennt sind, wobei das Dielektrikum zumindest durch die Flüssigkeit (4) so gebildet ist, dass es die Erzeugung einer elektrostatischen Kraft zwischen den Elektroden (5.11, 5.12) des Paares ermöglicht, wenn eine Spannung an sie angelegt wurde, um die bewegliche Elektrode zu bewegen und um somit die Membran in der angeregten Zone (2.2) anzuregen durch Treiben der Flüssigkeit in Richtung der zentralen Zone (2.1).

2. Optische Vorrichtung nach Anspruch 1, wobei das Dielektrikum zusätzlich zur Flüssigkeit aus einem zusätzlichen Dielektrikum (53) gebildet ist, das auf mindestens einer der gegenüberliegenden Elektroden angeordnet ist, wobei das Dielektrikum in Kontakt mit der Flüssigkeit (4) steht.

3. Vorrichtung nach einem der vorangegangen Ansprüche, bei der die Membran (2) zwischen dem optischen Feld (2.1) und der angeregten Zone (2.2) homogen ist.

4. Vorrichtung nach einem der vorangegangen Ansprüche, bei der sich die angeregte Zone (2.2) bis zu der zentralen Zone (2.1) hin erstreckt ohne diese zu berühren oder bei der die angeregte Zone vor der zentralen Zone aufhört und/oder bei der sich die angeregte Zone bis zu der Verankerungszone (2.3) hin erstreckt ohne diese zu berühren oder bei der die angeregte Zone vor der Verankerungszone aufhört.

5. Optische Vorrichtung nach einem der vorangegangen Ansprüche, bei der ein Elektrodenpaar (5.11, 5.12) mit einem mechanischen Anschlag (B) zusammenwirkt, um zu verhindern, dass die beiden Elektroden des Paares bei Betätigung in Kontakt kommen.

6. Optische Vorrichtung nach einem der vorangegangen Ansprüche, bei der die Membran (2) ein- oder mehrschichtig ist und mindestens eine kontinuierliche Schicht (20.2) aufweist, die die gesamte Oberfläche der Membran einnimmt.

7. Optische Vorrichtung nach einem der vorangegangen Ansprüche, bei der, wenn es nur eine angeregte Zone (2.2) gibt, die angeregte Zone (2.2) die zentrale Zone (2.1) umgibt und, wenn es mehrere angeregte Zonen (2.2) gibt, sie jeweils die zentrale Zone (2.1) umgeben oder die Gesamtheit der angeregten Zonen (2.2) die zentrale Zone (2.1) umgeben.

8. Optische Vorrichtung nach einem der vorangegangen Ansprüche, bei der die angeregte Zone (2.2) eine Krone oder ein Teil einer Krone ist, die wahlweise mit radialen Fingern versehen ist, die in Richtung der Verankerungszone (2.3) oder in Richtung der zentralen Zone (2.1) vorstehen.

9. Vorrichtung nach einem der vorangegangen Ansprüche, bei der mehrere angeregte Zonen (2.2) eine diskontinuierliche Krone um die zentrale Zone (2.1) bilden, wobei die Membran ferner eine kontinuierliche Verstärkungszone (2.6) umfasst, die die zentrale Zone (2.1) umgibt, die steifer als die angeregten Zonen ist und zwischen der zentralen Zone und den angeregten Zonen angeordnet ist.

10. Optische Vorrichtung nach einem der vorangegangen Ansprüche, bei der der Träger (1.5) im Wesentlichen flach ist oder ein Becken (3) zur Aufnahme der Flüssigkeit (4) aufweist.

11. Optische Vorrichtung nach einem der vorangegangen Ansprüche, wobei der Träger ein Becken (3) mit einem Boden und einer geneigten Kante aufweist, wobei sich die Elektrode (5.11) am Träger über den Boden und die Kante erstreckt.

12. Optische Vorrichtung nach einem der vorangegangen Ansprüche, bei der der Träger (1.5) einen Rahmen (1) und eine zweite Membran (20) umfasst, die am Rahmen verankert ist, wobei die am Träger (1.5) angeordnete Elektrode (5.11) mit der zweiten Membran (20) in Kontakt steht.

13. Optische Vorrichtung nach einem der Ansprüche 1 bis 12, wobei der Träger (1.5) einen Rahmen (1) und eine transparente Platte (1.1) umfasst, die an dem Rahmen befestigt ist und zur Bildung eines Beckens (3) für die Flüssigkeit (4) beiträgt, wobei die transparente Platte im Wesentlichen ebene und parallele Flächen oder eine Außenfläche des im Wesentlichen konkaven Beckens oder eine Außenfläche des im Wesentlichen konvexen Beckens aufweist.

14. Optische Vorrichtung nach einem der vorangegangen Ansprüche, bei der der Träger (1.5) zwei miteinander verbundene Substrate (100, 110) umfasst, wobei die Membran (20) mit einem der Substrate (100) eine Einheit bildet, wobei die am Träger angeordnete Elektrode (5.11) mit dem anderen Substrat (110) eine Einheit bildet.

15. Optische Vorrichtung nach einem der vorangegangen Ansprüche, bei der kapazitive Mittel (5.11, E) zum Messen der Flüssigkeitsdicke (4) an der angeregten Zone (2.2) vorgesehen sind, die in die Elektroden der Betätigungsmittel (5) überführt oder teilweise überführt werden können.

16. Optische Vorrichtung nach Anspruch 15, umfassend Mittel (8) zum Steuern der Betätigungsmittel (5) in Abhängigkeit von der gemessenen Flüssigkeitsdicke (4).

17. Optische Vorrichtung nach einem der vorangegangen Ansprüche, wobei es sich um eine Flüssiglinse oder einen Spiegel handelt.

18. Bildaufnahmevorrichtung, **dadurch gekennzeichnet, dass** sie mindestens eine optische Vorrichtung (L, L') gemäß einem der vorangegangen Ansprüche beinhaltet.

**Claims**

1. An optical device with a deformable membrane (2) comprising an anchoring area (2.3) on a support (1.5) configured to contain a constant volume of a single liquid (4) in contact with a rear face, a substantially central area (2.1), configured to be deformed reversibly from a rest position, actuation means (5) for displacing the liquid (4) at the level of the central area (2.1), stressing the membrane in at least one area (2.2) situated strictly between the central area (2.1) and the anchoring area (2.3), **characterized in that** the actuation means (5) is electrostatic and comprises at least one pair of opposing electrodes, one of the electrodes of the pair being moveable and being at least partially integrated into the rear face of the membrane while being in contact with the liquid, the other being at a level of the support, these electrodes (5.11, 5.12) being separated by dielectric, the dielectric being formed at least by the liquid (4), so that an electrostatic force is generated between the electrodes (5.11, 5.12) of the pair when a voltage is applied to them, in order to move the moveable electrode and thus allowing to stress the membrane in the stressed area (2.2) to force the liquid toward the central area (2.1).

2. An optical device according to claim 1, wherein the dielectric is formed, in addition to the liquid, of an additional dielectric (53) arranged on at least one of the opposing electrodes, the dielectric being in contact with the liquid (4).

3. An optical device according to claim 1, wherein the membrane (2) is homogeneous between the optical field (2.1) and the stressed area (2.2).

4. An optical device according to claim 1, wherein the stressed area (2.2) extends up to the central area (2.1) without encroaching upon the central area or stops before the central area (2.1) and/or the stressed area extends up to the anchoring area (2.3) without encroaching upon the anchoring area or stops before the anchoring area.

5. An optical device according to one of the preceding claims, wherein the pair of electrodes (5.11, 5.12) cooperates with a mechanical stop (B) to prevent the electrodes of the pair coming into contact during actuation.

6. An optical device according to one of the preceding claims, wherein the membrane (2) is monolayer or multilayer, and comprises at least one continuous layer (20.2) that occupies the whole surface of the membrane.

7. An optical device according to one of the preceding claims, wherein when there is a single stressed area (2.2), the stressed area (2.2) surrounds the central area (2.1), and when there is a plurality stressed areas (2.2), they each surround the central area (2.1) or the entirety of the stressed areas (2.2) surround the central area (2.1).

8. An optical device according to one of the preceding claims, wherein the stressed area (2.2) is a crown or a portion of a crown potentially including radial fingers projecting towards the anchoring area (2.3) or towards the central area (2.1).

9. An optical device according to one of the preceding claims, wherein a plurality of stressed areas (2.2) form a discontinuous crown around the central area (2.1), the membrane further comprising a continuous reinforcement area (2.6) surrounding the central area (2.1), more rigid than the stressed areas, situated between the central area and the stressed areas.

10. An optical device according to one of the preceding claims, wherein the support (1.5) is substantially flat or comprises a cuvette (3) to accommodate the liquid (4).

11. An optical device according to one of the preceding claims, wherein the support comprises a cuvette (3) with a bottom and a sloping side, the electrode (5.11) at the level of the support extending on the bottom and the side.

12. An optical device according to one of the preceding claims, wherein the support (1.5) comprises a frame (1) and a second membrane (20) anchored on the frame, the electrode (5.11) situated at the level of the support (1.5) being in contact with the second membrane (20).

13. An optical device according to one of claims 1 to 12, wherein the support (1.5) comprises a frame (1) and a transparent plate (1.1) fixed to the frame configured to form a cuvette (3) for the liquid (4), the transparent plate having substantially flat and parallel faces or one face external to the cuvette substantially concave or one face external to the cuvette substantially convex.

14. An optical device according to one of the preceding claims, wherein the support (1.5) comprises two substrates (100, 110) assembled together, the membrane (20) being integral with one of the substrates (100), the electrode (5.11) situated at the level of the support being integral with the other substrate (110).

15. An optical device according to one of the preceding claims, further comprising capacitive means (5.11, E) at the level of the stressed area (2.2) for measuring the thickness of liquid (4), the capacitive measuring means may be merged or partially merged with the electrodes of the actuation means (5).

16. An optical device according to claim 15, further comprising means for automatically controlling (8) the actuation means (5) according to the measured thickness of liquid (4).

17. An optical device according to one of the preceding claims, wherein it is a liquid lens or a mirror.

**18.** A camera device, comprising at least one optical device (L, L') according to one of the preceding claims.

EP 2 171 504 B1

FIG.1A

FIG.1B

FIG.1C

FIG.2A

21

FIG.2B

FIG.2C

FIG.3A

FIG.3B

FIG.3C

FIG.3D

FIG.4A

FIG.4B

FIG.4C

FIG.4D

FIG.4E

FIG.4F

FIG.4G

FIG.4H

FIG.4I

FIG.5A

FIG.5B

FIG.5C

**FIG.5D**

**FIG.5E**

**FIG.5F**

## FIG.5G

## FIG.5H

## FIG.5I

## FIG.5J

FIG.6A

FIG.6B

FIG.7A

FIG.7B

FIG.8A

FIG.8B

EP 2 171 504 B1

FIG.9A

FIG.9B

Champ optique

FIG.10A

FIG.10B

FIG.11A

FIG.11B

FIG.11C

FIG.11D

FIG.11E

FIG.12

FIG.13

FIG.14E

FIG.14F

FIG.14A

FIG.14B

FIG.14C

FIG.14D

**FIG.15A**

**FIG.15B**

FIG.16A

FIG.16B

**RÉFÉRENCES CITÉES DANS LA DESCRIPTION**

**Documents brevets cités dans la description**

- US 5917657 B
- US 6344930 B
- JP 10144975 A
- JP 8114703 A
- US 5138494 A
- WO 2003102636 A
- JP 2002243918 A
- JP 60220301 A
- JP 11133210 A
- EP 2889633 A1
- US 20050030438 A1
- EP 1672394 A

**Littérature non-brevet citée dans la description**

- **GILBERT REYNE.** Electromagnetic actuations for MOEMS, examples, adavantages and drawbacks of MAGMAS. *JEMS'01 Joint European Magnetic Symposia N°1,* 2002, vol. 242-45 (2), 1119-1125
- **S. TIMOSHENKO.** Théorie des plaques et des coques. 1951
- A novel external electrode configuration for electrostatic actuation of MEMS based devices. *Journal of Micromechanics and microengineering N°14,* 2004, 446-451
- **GOOI BOON CHONG et al.** Simulations based Design for a Large Displacement Electrostatically Actuated Microrelay. *Proceeding of SPIE,* 2001, vol. 4408, 254-262